(19) Europäisches Patentamt
European Patent Office
Office européen des brevets

(11) EP 4 775 033 A1

(12) # EUROPEAN PATENT APPLICATION
published in accordance with Art. 153(4) EPC

(43) Date of publication:
**15.07.2026 Bulletin 2026/29**

(21) Application number: **24862735.8**

(22) Date of filing: **30.08.2024**

(51) International Patent Classification (IPC):
***A01N 25/00*** *(2006.01)* ***A01N 53/06*** *(2006.01)*
***A01N 53/08*** *(2006.01)* ***A01N 53/10*** *(2006.01)*
***A01P 7/00*** *(2006.01)*

(52) Cooperative Patent Classification (CPC):
**A01N 25/00; A01N 53/00; A01P 7/00**

(86) International application number:
**PCT/JP2024/031298**

(87) International publication number:
**WO 2025/053083 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.09.2023 JP 2023143209**

(71) Applicant: **Sumitomo Chemical Company, Limited**
**Tokyo 103-6020 (JP)**

(72) Inventors:
- **SONOBE, Fuhito**
  **Takarazuka-shi, Hyogo 665-8555 (JP)**
- **IKEHIRA, Masashi**
  **Takarazuka-shi, Hyogo 665-8555 (JP)**

(74) Representative: **Vossius & Partner Patentanwälte Rechtsanwälte mbB**
**Siebertstraße 3**
**81675 München (DE)**

(54) **COMPOSITION CONTAINING SYNTHETIC PYRETHROID COMPOUND AND PENTAERYTHRITOL ANTIOXIDANT**

(57) The present invention relates to a composition containing a synthetic pyrethroid compound and a compound represented by Formula (1) :

[Chemical 1]

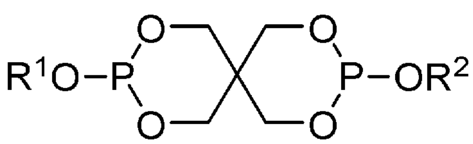

(1)

[In the formula, $R^1$ and $R^2$ are identical to or different from each other, and each represents a C9-C14 alkyl group.].

EP 4 775 033 A1

## Description

[Technical Field]

The present invention relates to a composition containing a synthetic pyrethroid compound and a pentaerythritol antioxidant.

This application claims priority to and benefit of Japanese Patent Application No. 2023-143209 filed on September 4, 2023, the entire contents of which are incorporated by reference into this description.

[Background Art]

Conventionally, pyrethroid compounds have been widely used for the control of various insect pests such as mosquitoes, flies, and cockroaches (for example, see Patent Literatures 1 and 2). However, in particular, pyrethroid compounds may sometimes show a decrease in insect pest control effect due to the instability of their chemical structure.

[Citation List]

[Patent Literature]

[Patent Literature 1] Japanese Unexamined Patent Application Publication No. 2000-063329
[Patent Literature 2] Japanese Unexamined Patent Application Publication No. 2001-011022

[Summary of the Invention]

[Problems to be Solved by the Invention]

The present invention aims to provide a novel composition containing a pyrethroid compound that excels in maintaining insect pest control effect.

[Means for Solving the Problems]

The present inventors conducted studies to provide a novel composition containing a pyrethroid compound. As a result, they found that a composition containing a synthetic pyrethroid compound and a specific antioxidant exhibits excellent effects, thereby completing the present invention.

The present invention includes, but is not limited to, the following aspects.

[1] A composition containing a synthetic pyrethroid compound and a compound represented by Formula (1):

[Chemical 1]

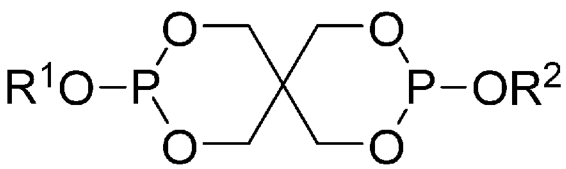

(1)

[In the formula, $R^1$ and $R^2$ are identical to or different from each other, and each represents a C9-C14 alkyl group.].

[2] The composition according to [1], wherein the synthetic pyrethroid compound is a synthetic pyrethroid compound having a partial structure represented by Formula (2):

[Chemical 2]

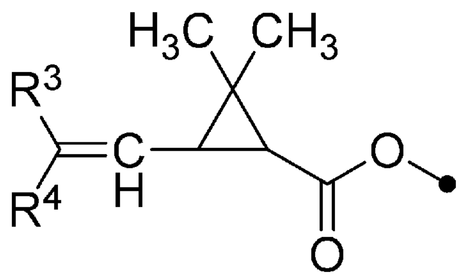

(2)

[In the formula, $R^3$ and $R^4$ are identical to or different from each other, and each represents a methyl group, a cyano group, a halogen atom, or a hydrogen atom, and '●' represents a binding site.].

[3] The composition according to [2], wherein $R^3$ and $R^4$ are identical to or different from each other, and each is a methyl group, a chlorine atom, or a hydrogen atom.

[4] The composition according to [2], wherein $R^3$ and $R^4$ are identical to or different from each other, and each is a methyl group or a hydrogen atom.

[5] The composition according to [1], wherein the synthetic pyrethroid compound is allethrin, prallethrin, metofluthrin, dimefluthrin, tetramethrin, imiprothrin, phenothrin, cyphenothrin, empenthrin, profluthrin, or resmethrin.

[6] The composition according to [1], wherein the synthetic pyrethroid compound is allethrin, prallethrin, metofluthrin, dimefluthrin, tetramethrin, imiprothrin, phenothrin, cyphenothrin, profluthrin, or resmethrin.

[7] The composition according to [1], wherein the synthetic pyrethroid compound is prallethrin, metofluthrin, dimefluthrin, phenothrin, cyphenothrin, or profluthrin.

[8] The composition according to [1], wherein the synthetic pyrethroid compound is etofenprox, permethrin, cypermethrin, flucythrinate, tralomethrin, cyfluthrin, cyhalothrin, tefluthrin, fluvalinate, fenpropathrin, bifenthrin, acrinathrin, cycloprothrin, silafluofen, or fenvalerate.

[9] The composition according to any one of [1] to [8], wherein $R^1$ and $R^2$ in the compound represented by Formula (1) are identical to or different from each other, and each is a C10-C13 alkyl group.

[10] The composition according to any one of [1] to [8], wherein $R^1$ and $R^2$ in the compound represented by Formula (1) are identical to or different from each other, and each is an isodecyl group or an isotridecyl group.

[11] Use of the composition according to any one of [1] to [10] as an insect pest control agent.

[12] An insect pest control method using the composition according to any one of [1] to [10].

[Effects of the Invention]

According to the present invention, it is possible to provide a novel composition containing a synthetic pyrethroid compound, which excels in maintaining insect pest control effect.

[Brief Description of Drawings]

[Figure 1] Figure 1 is a perspective view of an insect repellent device equipped with a resin formulation.

[Figure 2] Figure 2 is a perspective view of a spiral-shaped incense stick.

[Mode for Carrying Out the Invention]

In this description, "pyrethroid" typically refers to a generic term for natural pyrethrins obtained by extracting from pyrethrum (Dalmatian chrysanthemum, scientific name: Tanacetum cinerariifolium or Chrysanthemum cinerariaefolium) and artificially synthesized derivatives of pyrethrins, whereas "synthetic pyrethroid" represents a concept that substantially excludes natural pyrethrins from the aforementioned pyrethroids. That is, in this description, the term "synthetic pyrethroid" does not substantially include the six compounds that are natural pyrethrins: pyrethrin I, pyrethrin II, cinerin I, cinerin II, jasmoline I, and jasmoline II. Here, "does not substantially include" natural pyrethrins means that, relative to the total amount of synthetic pyrethroids, the content of the compounds selected from pyrethrin I, pyrethrin II, cinerin I, cinerin II, jasmoline I, and jasmoline II, which are natural pyrethrins, is less than 1% by mass.

<Synthetic Pyrethroid Compound>

In this description, examples of synthetic pyrethroid compounds include acrinathrin, allethrin, d-allethrin, dd-allethrin, beta-cyfluthrin, bifenthrin, cycloprothrin, cyfluthrin, cyhalothrin, cypermethrin, dimefluthrin, empenthrin, deltamethrin, terallethrin, esfenvalerate, etofenprox, fenpropathrin, fenvalerate, flucythrinate, flufenprox, flumethrin, fluvalinate, profluthrin, halfenprox, imiprothrin, permethrin, benfluthrin, prallethrin, resmethrin, d-resmethrin, sigma-cypermethrin, silafluofen, tefluthrin, tralomethrin, transfluthrin, tetramethrin, d-tetramethrin, phenothrin, d-phenothrin, cyphenothrin, alpha-cypermethrin, sialpha-cypermethrin, zeta-cypermethrin, lambda-cyhalothrin, gamma-cyhalothrin, furamethrin, tau-fluvalinate, resmethrin, metofluthrin, dimefluthrin, renofluthrin, meperfluthrin, heptafluthrin, teflumethrin, tetramethylfluthrin, and momfluorothrin.

These synthetic pyrethroid compounds can be used either alone or in combination of two or more. Some of the synthetic pyrethroid compounds may exist as optical isomers, stereoisomers, or geometric isomers, and the synthetic pyrethroid compounds of the present invention include such isomers and mixtures thereof.

One embodiment of the present invention is a composition, wherein synthetic pyrethroid compounds contain a synthetic pyrethroid compound having a partial structure represented by Formula (2):

[Chemical 3]

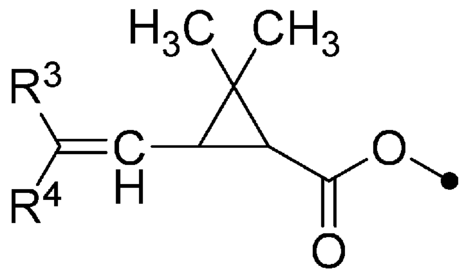

(2)

[In the formula, $R^3$ and $R^4$ are identical to or different from each other, and each represents a methyl group, a cyano group, a halogen atom, or a hydrogen atom, and **'●'** represents a binding site.].

Another embodiment of the present invention is a composition containing a synthetic pyrethroid compound having a partial structure in which $R^3$ and $R^4$ in Formula (2) are identical to or different from each other, and each is a methyl group, a chlorine atom, or a hydrogen atom.

Yet another embodiment of the present invention is a composition containing a synthetic pyrethroid compound having a partial structure in which $R^3$ and $R^4$ in Formula (2) are identical to or different from each other, and each is a methyl group or a hydrogen atom.

Yet another embodiment of the present invention is a composition in which the synthetic pyrethroid compound is allethrin, prallethrin, metofluthrin, dimefluthrin, tetramethrin, imiprothrin, phenothrin, cyphenothrin, empenthrin, profluthrin, or resmethrin.

Yet another embodiment of the present invention is a composition in which the synthetic pyrethroid compound is allethrin, prallethrin, metofluthrin, dimefluthrin, tetramethrin, imiprothrin, phenothrin, cyphenothrin, profluthrin, or resmethrin.

Yet another embodiment of the present invention is a composition in which the synthetic pyrethroid compound is prallethrin, metofluthrin, dimefluthrin, phenothrin, cyphenothrin, or profluthrin.

Yet another embodiment of the present invention is a composition in which the synthetic pyrethroid compound is etofenprox, permethrin, cypermethrin, flucythrinate, tralomethrin, cyfluthrin, cyhalothrin, tefluthrin, fluvalinate, fenpropathrin, bifenthrin, acrinathrin, cycloprothrin, silafluofen, or fenvalerate.

<Pentaerythritol Antioxidant>

One embodiment of the compound represented by Formula (1) is a pentaerythritol antioxidant.

The compound represented by Formula (1) can be commercially obtained or obtained by producing using a known method itself or a combination of known methods themselves. Examples of the compounds represented by Formula (1) include 3,9-bis(isodecyloxy)-2,4,8,10-tetraoxa-3,9-diphosphaspiro[5.5]undecane and 3,9-bis(isotridecyloxy)-2,4,8,10-tetraoxa-3,9-diphosphaspiro[5.5]undecane. 3,9-bis(isodecyloxy)-2,4,8,10-tetraoxa-3,9-diphosphaspiro[5.5]undecane is commercially available, for example, as JPE-10 (manufactured by Johoku Chemical Co., Ltd.). 3,9-bis(isotridecyloxy)-2,4,8,10-tetraoxa-3,9-diphosphaspiro[5.5]undecane is commercially available, for example, as JPE-13R (manufactured by Johoku Chemical Co., Ltd.).

The compound represented by Formula (1) contained in the composition of the present invention is a liquid at room temperature (for example, 5 to 35°C). The synthetic pyrethroid compound is also usually a liquid at room temperature (for example, 5 to 35°C). Therefore, the composition of the present invention forms a homogeneous phase at room

temperature.

The composition of the present invention may further contain a phenolic antioxidant. Examples of such phenolic antioxidants include 2,6-di-tert-butyl-4-methylphenol (hereinafter, sometimes abbreviated as BHT) and butylated hydroxyanisole (hereinafter, sometimes abbreviated as BHA), and BHT is preferable.

The composition of the present invention can be used as an active ingredient in insect pest control agents.

Target insect pests to be controlled to which the composition of the present invention can be applied include arthropods such as various insect pests and mites, and specific examples thereof include harmful flying insect pests, for example, Diptera pests including Culex such as Culex pipiens pallens, Culex tritaeniorhynchus, Culex quinquefasciatus, and Culex pipiens f. molestus; Aedes such as Aedes aegypti and Aedes albopictus; Anopheles such as Anopheles sinensis; Chironomidae; Muscidae such as Musca domestica, Muscina stabulans, and Fannia canicularis; Calliphoridae, Sarcophagidae, Drosophilidae, Psychodidae, Phoridae, Tabanidae, Simuliidae, Stomoxys, and Ceratopogonidae, etc. Among these, Culicidae such as Culex, Aedes, and Anopheles are particularly cited as target insect pests to be controlled.

One embodiment of the present invention is a method for controlling target insect pests, including applying an effective amount of the composition of the present invention.

Another embodiment of the present invention is a method for controlling target insect pests, wherein the application involves spraying, placing, volatilizing, or evaporating the composition of the present invention at locations where target insect pests inhabit, where they may occur, or where they may move or pass through.

Yet another embodiment of the present invention is a method for controlling target insect pests, wherein the application is carried out at room temperature (for example, 5 to 35°C) or by heating the composition of the present invention to 60 to 200°C.

Yet another embodiment of the present invention is a method for controlling target insect pests, wherein the application is carried out by heating the composition of the present invention to 150 to 250°C.

Yet another embodiment of the present invention is, such that the method for controlling target insect pests is a method for exterminating mosquitoes.

In this description, "control" is a concept that includes extermination, repellency, and prevention. "Extermination" refers to a concept that includes killing, knocking down, driving away, or repelling the target insect pests, and it is preferably killing or knocking down the target insect pests.

The composition of the present invention can be suitably applied to resin formulations and the like, but is not limited thereto.

<Resin Formulation>

One embodiment of the present invention is a resin formulation containing a synthetic pyrethroid compound and an antioxidant such as the compound represented by Formula (1).

The resin formulation according to one embodiment of the present invention is, for example, a formulation that can be housed and used in an insect repellent device 100 as shown in Figure 1. In this description, a composition containing a synthetic pyrethroid compound and an antioxidant, which is suitably used for a resin formulation, may be referred to as a composition for resin formulation. In the insect repellent device 100 in Figure 1, a resin formulation 25, which is molded into a net shape by knitting resin yarn spun from a resin composition containing a thermoplastic resin, a synthetic pyrethroid compound, and an antioxidant, is housed in a case 20 having openings 23 and 24. The insect repellent device 100 is usually placed in an environment at room temperature (for example, 5 to 35 °C), thereby volatilizing a composition for resin formulation contained in the resin formulation 25 into the atmosphere to make it possible to control insect pests. The case 20 may be composed of an inner member 21 and an outer member 22, and the inner member 21 and the outer member 22 may be capable of relative movement, and they may be aranged so that when the inner member 21 and the outer member 22 are in a specific position, the openings provided in the inner member 21 and the outer member 22 are separated from each other to seal the interior of the case 20. In addition, the case 20 may be constituted by providing with a hook 26 so that the insect repellent device can be installed by hanging it using the hook 26.

Alternatively, as another aspect, it is possible to control insect pests which contacted with the resin formulation. The aspect and usage of the resin formulation according to one embodiment of the present invention are not limited to the above disclosure, and by applying those of conventionally known resin formulations, excellent effects can be achieved in all cases.

Another embodiment of the present invention is a resin composition for producing the resin formulation.

The resin formulations to which the present invention can be applied will be described in detail below.

The resin formulation according to one embodiment of the present invention can be formed by melt-molding a resin composition containing a thermoplastic resin, a synthetic pyrethroid compound, and an antioxidant such as the compound represented by Formula (1). The resin formulation may be produced by knitting or weaving resin yarn spun from the resin composition by melt spinning so as to form a large number of meshes, into a net shape.

In one embodiment of the present invention, a thermoplastic resin is used as a carrier for retaining a synthetic

pyrethroid compound and an antioxidant. As thermoplastic resins, polyolefin resins, polyvinyl alcohol, polyvinyl acetate, polycarbonate, polyesters, polyamides, polystyrene, polymethyl methacrylate, acrylonitrile-butadiene-styrene copolymers, polyvinyl chloride, or the like can be used.

Polyolefin resins are preferable as thermoplastic resins, and the following compounds are preferable as polyolefin resins.

(1) Homopolymers of α-olefins: for example, polyethylene, polypropylene, etc.
(2) Ethylene-α-olefin copolymers: for example, ethylene-propylene copolymer, ethylene-butene-1 copolymer, ethylene-4-methyl-1-pentene copolymer, or ethylene-hexene copolymer, etc.
(3) Copolymers of ethylene with organic carboxylic acid derivatives having an ethylenic unsaturated bond: for example, ethylene-methyl methacrylate copolymer, ethylene-vinyl acetate copolymer, ethylene-acrylic acid copolymer, or ethylene-vinyl acetate-methyl methacrylate copolymer, etc.

Another embodiment of the present invention is a resin formulation formed by knitting or weaving resin yarn, obtained by melt spinning a thermoplastic resin that does not contain a composition for resin formulation containing a synthetic pyrethroid compound and an antioxidant, so as to form a large number of meshes, to shape into a net shape, followed by coating the net-shaped molded body with a composition for resin formulation containing a synthetic pyrethroid compound and an antioxidant.

Yet another embodiment of the present invention is a resin formulation formed by knitting or weaving resin yarn, obtained by melt spinning a thermoplastic resin composition containing a thermoplastic resin and either a synthetic pyrethroid compound or an antioxidant, so as to form a large number of meshes, to shape into a net shape, followed by coating the net-shaped molded body with either a synthetic pyrethroid compound or an antioxidant not contained in the net-shaped molded body.

Yet another embodiment of the present invention is a resin formulation formed by knitting or weaving resin yarn, obtained by melt spinning a thermoplastic resin composition containing a thermoplastic resin and a part of the total amount of a composition for resin formulation containing a synthetic pyrethroid compound and an antioxidant contained in the final product, so as to form a large number of meshes, to shape into a net shape, followed by coating the net-shaped molded body with the remaining composition for resin formulation to be contained in the final product.

As yet another embodiment of the present invention, resin formulations are not limited to net-shaped molded bodies, and may be formed into, for example, plate shape, film shape, sheet shape (single layer or multi-layer), tape shape, yarn shape, mesh shape, fabric shape, ring shape, tube shape, pipe shape, string shape, mat shape, or block shape, etc.

As yet another embodiment of the present invention, specific product forms of the resin formulation may be duvet covers, pillow covers, protective covers, product packaging, curtains, mattresses, sofa members, animal collars, animal ear tags, clothing, protective hats, arm/leg covers, lure strings, horticultural stakes, crop protection films, agricultural mulch, greenhouse films, screen doors, mosquito nets, garbage bags, garbage storage nets, drainage nets, waste members, trash cans, drainage members, cushioning materials, foamed materials, heat insulating materials, various tubes, drain pipes, or gaskets, etc.

Regardless of the shape or product form, the resin formulation can exhibit excellent insect pest control effect either by the composition for resin formulation volatilized from the resin formulation or by contacting with the resin formulation.

The resin formulation according to one embodiment of the present invention can be produced as follows:

(1) A thermoplastic resin, a synthetic pyrethroid compound, an antioxidant such as the compound represented by Formula (1), and optional additive(s) are mixed and stirred, and the obtained mixture is melt-kneaded.
(2) A thermoplastic resin, at least one component selected from a synthetic pyrethroid compound and an antioxidant such as the compound represented by Formula (1), and optional additive(s) are mixed and stirred, and the obtained mixture is melt-kneaded to obtain a resin molded body. Then, the component that has not been selected is coated on the surface of the resin molded body.
(3) A thermoplastic resin and optional additive (s) are mixed and stirred, and the obtained mixture is melt-kneaded to obtain a resin molded body. Then, a synthetic pyrethroid compound and an antioxidant such as the compound represented by Formula (1) are coated on the surface of the resin molded body.
(4) A thermoplastic resin, a part of the total amount of a synthetic pyrethroid compound and an antioxidant such as the compound represented by Formula (1), and optional additive (s) are mixed and stirred, and the obtained mixture is melt-kneaded to obtain a resin molded body. Then, the remaining the synthetic pyrethroid compound and the antioxidant are coated on the surface of the resin molded body.

Alternatively, one or more components selected from a synthetic pyrethroid compound and an antioxidant such as the compound represented by Formula (1) may also be supported on a carrier, and then melt-kneaded with a

thermoplastic resin to produce the resin composition of the present invention. Examples of carriers include silica-based compounds, zeolites, clay minerals, metal oxides, micas, hydrotalcites, and organic carriers. As silica-based compounds, there are amorphous silica and crystalline silica, and examples thereof include powdered silicate, fine powder silicate, acid clay, diatomaceous earth, quartz, and white carbon. Examples of zeolites include A-type zeolite and mordenite; examples of clay minerals include montmorillonite, saponite, beidellite, bentonite, kaolinite, halloysite, nacrite, dickite, anauxite, illite, and sericite; examples of metal oxides include zinc oxide, magnesium oxide, aluminum oxide, iron oxide, copper oxide, and titanium oxide; examples of micas include mica and vermiculite; examples of hydrotalcites include hydrotalcite and smectite; and examples of organic carriers include carbons (such as charcoal, peat, and grass peat), polymer beads (such as microcrystalline cellulose, polystyrene beads, acrylic ester beads, methacrylic ester beads, and polyvinyl alcohol beads), and their crosslinked polymer beads. Other examples include perlite, gypsum, ceramics, and volcanic rock. As the carrier, amorphous inorganic carriers are preferable, and amorphous silica is more preferable.

In the resin formulation according to one embodiment of the present invention, in addition to producing by melt spinning a resin composition containing a thermoplastic resin, a synthetic pyrethroid compound, and an antioxidant such as the compound represented by Formula (1), methods generally used for resin molding processing can be applied, and for example, extrusion molding, injection molding, blow molding, compression molding, powder molding, or press molding can produce the target molded body. When coating a part of the raw materials onto the molded body, for example, a dipping method or a spraying method can be applied.

In the resin formulation according to one embodiment of the present invention, relative to the total amount of the resin formulation, the content of thermoplastic resin(s) may be 30 to 99% by mass, preferably 50 to 99% by mass, and the content of the composition for resin formulation containing synthetic pyrethroid compound(s) and antioxidant(s) such as the compound represented by Formula (1) may be 1 to 70% by mass, preferably 1 to 50% by mass. Here, the sum of the contents of the thermoplastic resin(s) and the composition for resin formulation does not exceed 100% by mass.

One embodiment of the composition for resin formulation of the present invention is a composition containing 0.001 to 100 parts by mass, preferably 0.005 to 50 parts by mass, more preferably 0.01 to 10 parts by mass, of the compound represented by Formula (1)

[Chemical 4]

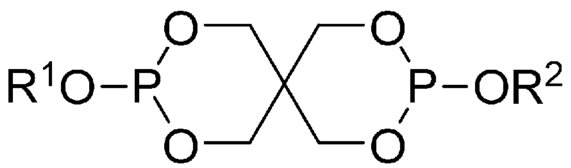 (1)

[In the formula, $R^1$ and $R^2$ have the meanings described above] per 1 part by mass of synthetic pyrethroid compound(s).

Another embodiment of the composition for resin formulation of the present invention is a composition containing, per 1 part by mass of at least one synthetic pyrethroid compound selected from the group consisting of allethrin, prallethrin, metofluthrin, dimefluthrin, tetramethrin, imiprothrin, phenothrin, cyphenothrin, empenthrin, profluthrin, and resmethrin, 0.001 to 100 parts by mass, preferably 0.005 to 50 parts by mass, and more preferably 0.01 to 10 parts by mass, of 3,9-bis(isodecyloxy)-2,4,8,10-tetraoxa-3,9-diphosphaspiro[5.5]undecane.

Yet another embodiment of the composition for resin formulation of the present invention is a composition containing, per 1 part by mass of prallethrin, 0.001 to 100 parts by mass, preferably 0.005 to 50 parts by mass, and more preferably 0.01 to 10 parts by mass, of 3,9-bis(isodecyloxy)-2,4,8,10-tetraoxa-3,9-diphosphaspiro[5.5]undecane.

Yet another embodiment of the composition for resin formulation of the present invention is a composition containing, per 1 part by mass of metofluthrin, 0.001 to 100 parts by mass, preferably 0.005 to 50 parts by mass, and more preferably 0.01 to 10 parts by mass, of 3,9-bis(isodecyloxy)-2,4,8,10-tetraoxa-3,9-diphosphaspiro[5.5]undecane.

Yet another embodiment of the composition for resin formulation of the present invention is a composition containing, per 1 part by mass of dimefluthrin, 0.001 to 100 parts by mass, preferably 0.005 to 50 parts by mass, and more preferably 0.01 to 10 parts by mass, of 3,9-bis(isodecyloxy)-2,4,8,10-tetraoxa-3,9-diphosphaspiro[5.5]undecane.

Yet another embodiment of the composition for resin formulation of the present invention is a composition containing, per 1 part by mass of phenothrin, 0.001 to 100 parts by mass, preferably 0.005 to 50 parts by mass, and more preferably 0.01 to 10 parts by mass, of 3,9-bis(isodecyloxy)-2,4,8,10-tetraoxa-3,9-diphosphaspiro[5.5]undecane.

Yet another embodiment of the composition for resin formulation of the present invention is a composition containing, per 1 part by mass of cyphenothrin, 0.001 to 100 parts by mass, preferably 0.005 to 50 parts by mass, and more preferably 0.01 to 10 parts by mass, of 3,9-bis(isodecyloxy)-2,4,8,10-tetraoxa-3,9-diphosphaspiro[5.5]undecane.

Yet another embodiment of the composition for resin formulation of the present invention is a composition containing, per 1 part by mass of profluthrin, 0.001 to 100 parts by mass, preferably 0.005 to 50 parts by mass, and more preferably 0.01 to 10 parts by mass, of 3,9-bis(isodecyloxy)-2,4,8,10-tetraoxa-3,9-diphosphaspiro[5.5]undecane.

Another embodiment of the composition for resin formulation of the present invention is a composition containing, per 1 part by mass of at least one synthetic pyrethroid compound selected from the group consisting of allethrin, prallethrin, metofluthrin, dimefluthrin, tetramethrin, imiprothrin, phenothrin, cyphenothrin, empenthrin, profluthrin, and resmethrin, 0.001 to 100 parts by mass, preferably 0.005 to 50 parts by mass, and more preferably 0.01 to 10 parts by mass, of 3,9-bis(isotridecyloxy)-2,4,8,10-tetraoxa-3,9-diphosphaspiro[5.5]undecane.

Yet another embodiment of the composition for resin formulation of the present invention is a composition containing, per 1 part by mass of prallethrin, 0.001 to 100 parts by mass, preferably 0.005 to 50 parts by mass, and more preferably 0.01 to 10 parts by mass, of 3,9-bis(isotridecyloxy)-2,4,8,10-tetraoxa-3,9-diphosphaspiro[5.5]undecane.

Yet another embodiment of the composition for resin formulation of the present invention is a composition containing, per 1 part by mass of metofluthrin, 0.001 to 100 parts by mass, preferably 0.005 to 50 parts by mass, and more preferably 0.01 to 10 parts by mass, of 3,9-bis(isotridecyloxy)-2,4,8,10-tetraoxa-3,9-diphosphaspiro[5.5]undecane.

Yet another embodiment of the composition for resin formulation of the present invention is a composition containing, per 1 part by mass of dimefluthrin, 0.001 to 100 parts by mass, preferably 0.005 to 50 parts by mass, and more preferably 0.01 to 10 parts by mass, of 3,9-bis(isotridecyloxy)-2,4,8,10-tetraoxa-3,9-diphosphaspiro[5.5]undecane.

Yet another embodiment of the composition for resin formulation of the present invention is a composition containing, per 1 part by mass of phenothrin, 0.001 to 100 parts by mass, preferably 0.005 to 50 parts by mass, and more preferably 0.01 to 10 parts by mass, of 3,9-bis(isotridecyloxy)-2,4,8,10-tetraoxa-3,9-diphosphaspiro[5.5]undecane.

Yet another embodiment of the composition for resin formulation of the present invention is a composition containing, per 1 part by mass of cyphenothrin, 0.001 to 100 parts by mass, preferably 0.005 to 50 parts by mass, and more preferably 0.01 to 10 parts by mass, of 3,9-bis(isotridecyloxy)-2,4,8,10-tetraoxa-3,9-diphosphaspiro[5.5]undecane.

Yet another embodiment of the composition for resin formulation of the present invention is a composition containing, per 1 part by mass of profluthrin, 0.001 to 100 parts by mass, preferably 0.005 to 50 parts by mass, and more preferably 0.01 to 10 parts by mass, of 3,9-bis(isotridecyloxy)-2,4,8,10-tetraoxa-3,9-diphosphaspiro[5.5]undecane.

In the composition for resin formulation according to one embodiment of the present invention, aspects of compositions containing a synthetic pyrethroid compound and an antioxidant such as the compound represented by Formula (1) (also referred to as compositions for resin formulation) include the following compositions.

[Aspect 1] A composition containing 1 to 1000 parts by mass of prallethrin and 1 to 1000 parts by mass of 3,9-bis(isodecyloxy)-2,4,8,10-tetraoxa-3,9-diphosphaspiro[5.5]undecane.

[Aspect 2] A composition containing 1 to 1000 parts by mass of metofluthrin and 1 to 1000 parts by mass of 3,9-bis(isodecyloxy)-2,4,8,10-tetraoxa-3,9-diphosphaspiro[5.5]undecane.

[Aspect 3] A composition containing 1 to 1000 parts by mass of dimefluthrin and 1 to 1000 parts by mass of 3,9-bis(isodecyloxy)-2,4,8,10-tetraoxa-3,9-diphosphaspiro[5.5]undecane.

[Aspect 4] A composition containing 1 to 1000 parts by mass of phenothrin and 1 to 1000 parts by mass of 3,9-bis(isodecyloxy)-2,4,8,10-tetraoxa-3,9-diphosphaspiro[5.5]undecane.

[Aspect 5] A composition containing 1 to 1000 parts by mass of cyphenothrin and 1 to 1000 parts by mass of 3,9-bis(isodecyloxy)-2,4,8,10-tetraoxa-3,9-diphosphaspiro[5.5]undecane.

[Aspect 6] A composition containing 1 to 1000 parts by mass of profluthrin and 1 to 1000 parts by mass of 3,9-bis(isodecyloxy)-2,4,8,10-tetraoxa-3,9-diphosphaspiro[5.5]undecane.

[Aspect 7] A composition containing 1 to 1000 parts by mass of prallethrin and 1 to 1000 parts by mass of 3,9-bis(isotridecyloxy)-2,4,8,10-tetraoxa-3,9-diphosphaspiro[5.5]undecane.

[Aspect 8] A composition containing 1 to 1000 parts by mass of metofluthrin and 1 to 1000 parts by mass of 3,9-bis(isotridecyloxy)-2,4,8,10-tetraoxa-3,9-diphosphaspiro[5.5]undecane.

[Aspect 9] A composition containing 1 to 1000 parts by mass of dimefluthrin and 1 to 1000 parts by mass of 3,9-bis(isotridecyloxy)-2,4,8,10-tetraoxa-3,9-diphosphaspiro[5.5]undecane.

[Aspect 10] A composition containing 1 to 1000 parts by mass of phenothrin and 1 to 1000 parts by mass of 3,9-bis(isotridecyloxy)-2,4,8,10-tetraoxa-3,9-diphosphaspiro[5.5]undecane.

[Aspect 11] A composition containing 1 to 1000 parts by mass of cyphenothrin and 1 to 1000 parts by mass of 3,9-bis(isotridecyloxy)-2,4,8,10-tetraoxa-3,9-diphosphaspiro[5.5]undecane.

[Aspect 12] A composition containing 1 to 1000 parts by mass of profluthrin and 1 to 1000 parts by mass of 3,9-bis(isotridecyloxy)-2,4,8,10-tetraoxa-3,9-diphosphaspiro[5.5]undecane.

One embodiment of the present invention is a method for controlling target insect pests, which includes placing a resin formulation at room temperature and either volatilizing an effective amount of a composition for resin formulation into the atmosphere or allowing the target insect pests to contact with the resin formulation.

Another embodiment of the present invention is, such that the method for controlling target insect pests is a method for exterminating mosquitoes.

The composition of the present invention can also be applied to incense sticks.

<Incense Stick>

One embodiment of the present invention is an incense stick containing a synthetic pyrethroid compound and an antioxidant such as the compound represented by Formula (1).

When applying the composition of the present invention to incense sticks, as a synthetic pyrethroid compound, dimefluthrin, metofluthrin, transfluthrin, allethrin, prallethrin, renofluthrin, mepafluthrin, heptafluthrin, teflumethrin, or tetramethylfluthrin can be preferably used, and dimefluthrin can be particularly preferably used.

When the composition of the present invention is applied to incense sticks, synthetic pyrethroid compound(s) may be contained in an amount of 0.001 to 10% by mass relative to the total amount of the incense stick.

When the composition of the present invention is applied to incense sticks, antioxidant(s) may be contained in an amount of 0.001 to 10% by mass relative to the total amount of the incense stick.

One embodiment of the composition to be applied to incense sticks of the present invention is a composition containing, per 1 part by mass of at least one synthetic pyrethroid compound selected from the group consisting of dimefluthrin, metofluthrin, transfluthrin, allethrin, prallethrin, renofluthrin, mepafluthrin, heptafluthrin, teflumethrin, and tetramethylfluthrin, 0.001 to 100 parts by mass, preferably 0.005 to 50 parts by mass, more preferably 0.01 to 10 parts by mass, of at least one antioxidant selected from the group consisting of 3,9-bis(isotridecyloxy)-2,4,8,10-tetraoxa-3,9-diphosphaspiro[5.5]undecane, 3,9-bis(isodecyloxy)-2,4,8,10-tetraoxa-3,9-diphosphaspiro[5.5]undecane, and hydrogenated bisphenol A pentaerythritol phosphite polymer.

Another embodiment of the composition to be applied to incense sticks of the present invention is a composition containing, per 1 part by mass of dimefluthrin, 0.001 to 100 parts by mass, preferably 0.005 to 50 parts by mass, more preferably 0.01 to 10 parts by mass, of 3,9-bis(isotridecyloxy)-2,4,8,10-tetraoxa-3,9-diphosphaspiro[5.5]undecane.

Yet another embodiment of the composition to be applied to incense sticks of the present invention is a composition containing, per 1 part by mass of dimefluthrin, 0.001 to 100 parts by mass, preferably 0.005 to 50 parts by mass, more preferably 0.01 to 10 parts by mass, of 3,9-bis(isodecyloxy)-2,4,8,10-tetraoxa-3,9-diphosphaspiro[5.5]undecane.

Yet another embodiment of the composition to be applied to incense sticks of the present invention is a composition containing, per 1 part by mass of dimefluthrin, 0.001 to 100 parts by mass, preferably 0.005 to 50 parts by mass, more preferably 0.01 to 10 parts by mass, of hydrogenated bisphenol A pentaerythritol phosphite polymer.

The incense stick according to one embodiment of the present invention can be produced by adding water to raw material powder made by mixing a synthetic pyrethroid compound, an antioxidant, and an incense stick base material, followed by kneading, molding using an extruder, punching machine, and the like, and then drying naturally or by heating. The synthetic pyrethroid compound and antioxidant may be incorporated not by directly adding them to the raw material powder, but after molding the raw material powder, by dropping, dipping, spraying, or coating with a liquid composition containing the synthetic pyrethroid compound and antioxidant, followed by natural drying or heated drying. Further, a chemical liquid containing an antioxidant and the like may be incorporated by dropping, dipping, spraying, or coating onto a commercially available regular-type mosquito coil, mini-size mosquito coil, or thick-rolled-type mosquito coil, followed by natural or heated drying, thereby producing the incense stick according to one embodiment of the present invention. During the production, the antioxidant may be added in a state dissolved in a solvent.

In the incense sticks according to one embodiment of the present invention, their shape and size are not particularly limited; they may be rod-shaped, slightly curved, or otherwise appropriately set according to the intended use, such as spiral-shaped, conical-shaped, triangular pyramid-shaped, fan-shaped, or plate-shaped. It is preferable for the incense stick according to one embodiment of the present invention, that the cross-sectional area viewed from the burning direction of the incense stick is 4 to 100 $mm^2$. Even if the cross-sectional area varies depending on the location, such as in a triangular pyramid shape, the cross-sectional area viewed from the burning direction may be within the range of 4 to 100 $mm^2$, and the preferred range (for example, 4 $mm^2$ or more and less than 15 $mm^2$, 15 $mm^2$ or more and less than 40 $mm^2$, 40 $mm^2$ or more and 100 $mm^2$ or less) can be appropriately selected according to the shape and intended use. The cross-sectional shape of the incense stick may be circular, or a polygon such as triangle, quadrangle, pentagon, or hexagon. Furthermore, grooves or protrusions may be formed on the surface of the incense stick as necessary, or the incense stick may have a hollow structure.

As one embodiment of the present invention, for example, a spiral-shaped incense stick 200 as shown in Figure 2 can be provided. The spiral-shaped incense stick 200 can be used by igniting the end portion (also referred to as the ignition portion) 30. By igniting the incense stick, the synthetic pyrethroid compound in the incense stick is heated and volatilized, thereby controlling insect pests. The incense stick is usually used while being held by a known incense stick holder itself (not shown in the figure). The incense stick may be held by inserting the supporting part of the incense stick holder into a slit 31 provided in the incense stick, or by sandwiching the whole incense stick with mesh-shaped holding parts made of a non-flammable material such as metal provided on the incense stick holder, without using the slit 31. The incense stick can be used after cutting it at any desired location. By igniting the cut end of the incense stick, it can be used. By using the incense stick after cutting, the burning time of the incense stick can be adjusted.

[Incense Stick Base Material]

Incense stick base materials which can be used in the incense stick according to one embodiment of the present invention include combustion-supporting agents/fillers (combustion-supporting agents and/or fillers) and binders.

Examples of combustion-supporting agents/fillers include charcoal powder, wood powder, pyrethrum extraction residue powder, citrus peel powder, tea powder, coconut shell powder, diatomaceous earth, talc, clay, and kaolin. These combustion-supporting agents/fillers may be used singly or as mixtures of two or more.

It is preferable that the incense stick base material contains the combustion-supporting agents/fillers in a total amount of 50 to 80% by mass, relative to the total amount of the incense stick base material.

Examples of binders include tab powder, starch (a-starch, tapioca flour, etc.), methyl cellulose, carboxymethyl cellulose (CMC), and pulp. These binders may be used singly or as mixtures of two or more.

It is preferable that the incense stick base material contains the binder in an amount of 15 to 40% by mass, relative to the total amount of the incense stick base material.

The sum of the contents of combustion-supporting agents/fillers and binders does not exceed 100% by mass, relative to the total amount of the incense stick base material.

The incense stick base material may also contain an antifungal agent, a preservative and the like.

Examples of such antifungal agents and preservatives include dehydroacetic acid salts, sorbic acid salts, and p-hydroxybenzoic acid salts.

The incense stick base material may also contain a colorant.

Examples of such colorants include malachite green and food additives (Food Blue No. 1, Food Yellow No. 4, Food Red No. 106, etc.).

The incense stick base material may also contain a synthetic fragrance component or a natural fragrance component.

Examples of synthetic fragrance components include galaxolide, musk ketone, hexyl cinnamic aldehyde, Iso E Super, methyl dihydrojasmonate, ethylene brassylate, geraniol, methyl atrarate, hexyl salicylate, tricyclodecenyl acetate, oranger crystals, ambroxan, tonalide (6-acetyl-1,1,2,4,4,7-hexamethyltetralin), γ-undecalactone, cashmeran, calone, heliotropin, dihydroindenyl-2,4-dioxane, α-isomethylionone, indole, ethyl vanillin, methyl cedryl ketone, methyl β-naphthyl ketone, rose phenone, coumarin, vanillin, styrax resinoid, benzyl benzoate, undecanal, benzyl salicylate, ionone, α-ionone, β-ionone, lily aldehyde, 3,5-dinitro-2,6-dimethyl-4-t-butylacetophenone, acetyl cedrene, 2-cyclohexylidene-2-phenylacetaldehyde, isolongifolanone, and cis-3-hexenol.

Examples of natural fragrance components include plant essential oils or extracts such as citronella oil, cinnamon oil, eucalyptus oil, lemon eucalyptus oil, hiba oil, lavender oil, orange oil, grapefruit oil, cedarwood oil, geranium oil, thyme white oil, peppermint oil, rose oil, oakmoss oil, as well as powdered aromatic woods, powdered Chinese herbal aromatic materials, sandalwood, clove, spikenard, patchouli, agarwood, cinnamon bark, olibanum, benzoin, and frankincense.

These fragrance components may be used singly or as mixtures of two or more. When the incense stick base material contains fragrance components, the content is preferably 0.001 to 10% by mass, more preferably 0.005 to 8% by mass, even more preferably 0.01 to 5% by mass, and especially preferably 0.05 to 3% by mass, relative to the total mass of the incense stick base material.

The composition of the present invention can also be applied in the agricultural field.

One embodiment of the composition of the present invention which can be applied to the agricultural field is a composition containing one or more synthetic pyrethroid compounds selected from etofenprox, permethrin, cypermethrin, flucythrinate, tralomethrin, cyfluthrin, cyhalothrin, tefluthrin, fluvalinate, fenpropathrin, bifenthrin, acrinathrin, cycloprothrin, silafluofen, and fenvalerate, and the compound represented by Formula (1).

The composition of the present invention may be mixed with or used in combination with one or more ingredients selected from the group consisting of the following Group (a), Group (b), Group (c), and Group (d) (hereinafter referred to as "Present ingredient").

The term "mixed or used in combination" means that the composition of the present invention and Present ingredient are used simultaneously, separately, or at time intervals.

When the composition of the present invention is used simultaneously with Present ingredient, the composition of the present invention and Present ingredient may be contained in separate formulations or contained in one formulation.

In one embodiment of the present invention, although not particularly limited, one or more ingredients selected from Group (a), Group (b), Group (c), and Group (d) are mixed with or used in combination so as to be in an amount of 0.001 to 1000 parts by mass, preferably 0.002 to 500 parts by mass, more preferably 0.01 to 100 parts by mass, per 1 part by mass of one or more synthetic pyrethroid compounds selected from etofenprox, permethrin, cypermethrin, flucythrinate, tralomethrin, cyfluthrin, cyhalothrin, tefluthrin, fluvalinate, fenpropathrin, bifenthrin, acrinathrin, cycloprothrin, silafluofen, and fenvalerate.

One aspect of the present invention is, such that one or more ingredients selected from the group consisting of

Group (a), Group (b), Group (c), and Group (d), and the composition of the present invention are contained (hereinafter referred to as "Composition A").

One embodiment of Composition A, although not particularly limited, is a composition containing one or more ingredients selected from the group consisting of Group (a), Group (b), Group (c), and Group (d) in an amount of 0.001 to 1000 parts by mass, preferably 0.002 to 500 parts by mass, and more preferably 0.01 to 100 parts by mass, relative to 1 part by mass of one or more synthetic pyrethroid compounds selected from etofenprox, permethrin, cypermethrin, flucythrinate, tralomethrin, cyfluthrin, cyhalothrin, tefluthrin, fluvalinate, fenpropathrin, bifenthrin, acrinathrin, cycloprothrin, silafluofen, and fenvalerate.

Group (a) is a group consisting of acetylcholinesterase inhibitors (for example, carbamate insecticides and organophosphate insecticides), GABA-gated chloride channel blockers (for example, phenylpyrazole insecticides), sodium channel modulators (for example, pyrethroid insecticides), nicotinic acetylcholine receptor competitive modulators (for example, neonicotinoid insecticides), nicotinic acetylcholine receptor allosteric modulators, glutamate-gated chloride channel allosteric modulators (for example, macrolide insecticides), juvenile hormone mimics, multisite inhibitors, chordotonal organ TRPV channel modulators, mite growth inhibitors, microbial disruptors of insect midgut membranes, inhibitors of mitochondrial ATP synthase, uncouplers of oxidative phosphorylation, nicotinic acetylcholine receptor channel blockers (for example, nereistoxin insecticides), inhibitors of chitin biosynthesis, moulting disruptors, ecdysone receptor agonists, octopamine receptor agonists, mitochondrial complexes I, II, III, and IV electron transport inhibitors, voltage-dependent sodium channel blockers, inhibitors of acetyl CoA carboxylase, ryanodine receptor modulators (for example, diamide insecticides), chordotonal organ modulators, and microbial insecticides, and other insecticidal active ingredients, miticidal active ingredients, and nematicidal active ingredients. They are described in the classification on the basis of action mechanism by IRAC.

Group (b) is a group consisting of nucleic acids synthesis inhibitors (for example, phenylamide fungicides and acylamino acid fungicides), cell division and cytoskeleton inhibitors (for example, MBC fungicides), respiration inhibitors (for example, QoI fungicides, and QiI fungicides), amino acids synthesis and protein synthesis inhibitors (for example, anilino-pyridine fungicides), signal transduction inhibitors, lipid synthesis and membrane synthesis inhibitors, sterol biosynthesis inhibitors (for example, DMI fungicides such as triazole fungicides), cell wall biosynthesis inhibitors, melanin synthesis inhibitors, plant defense inducers, fungicides with multi-site contact activity, microbial fungicides, and other fungicidal active ingredients. They are described in the classification on the basis of action mechanism by FRAC.

Group (c) is a group of plant growth regulatory ingredients (including mycorrhizal fungi and root nodule bacteria).

Group (d) is a group of repellent ingredients.

The composition of the present invention is effective against harmful arthropods such as insect pests and harmful mites, harmful nematodes, and harmful mollusks. Examples of harmful arthropods, harmful nematodes, and harmful mollusks include the following.

Hemiptera:

from the family Delphacidae, for example, small brown planthopper (Laodelphax striatellus), brown planthopper (Nilaparvata lugens), white-backed planthopper (Sogatella furcifera), corn planthopper (Peregrinus maidis), cereal leafhopper ( Javesella pellucida), sugarcane leafhopper (Perkinsiella saccharicida), Tagosodes orizicolus and Stenocranus pacificus;

from the family Cicadellidae, for example, green rice leafhopper (Nephotettix cincticeps), green paddy leafhopper (Nephotettix virescens), rice leafhopper (Nephotettix nigropictus), zigzag-striped leafhopper (Recilia dorsalis), tea green leafhopper (Empoasca onukii), potato leafhopper (Empoasca fabae), corn leafhopper (Dalbulus maidis), rice leafhopper (Cofana spectra), and Amrasca biguttula biguttula;

from the family Aphrophoridae, for example, European spittlebug (Philaenus spumarius);

from the family Cercopidae, for example, Mahanarva posticata and Mahanarva fimbriolata;

from the family Aphididae, for example, bean aphid (Aphis fabae), soybean aphid (Aphis glycines), cotton aphid (Aphis gossypii), green apple aphid (Aphis pomi), apple aphid (Aphis spiraecola), green peach aphid (Myzus persicae), leaf-curling plum aphid (Brachycaudus helichrysi), cabbage aphid (Brevicoryne brassicae), rosy apple aphid (Dysaphis plantaginea), false cabbage aphid (Lipaphis erysimi), potato aphid (Macrosiphum euphorbiae), foxglove aphid (Aulacorthum solani), lettuce aphid (Nasonovia ribisnigri), grain aphid (Rhopalosiphum padi), corn aphid (Rhopalosiphum maidis), brown citrus aphid (Toxoptera citricida), mealy plum aphid (Hyalopterus pruni), cane aphid (Melanaphis sacchari), black rice root aphid (Tetraneura nigriabdominalis), sugarcane cottony aphid (Ceratovacuna lanigera), apple woolly aphid (Eriosoma lanigerum), and English grain aphid (Sitobion avenae);

from the family Phylloxeridae, for example, grapevine phylloxera (Daktulosphaira vitifoliae), Pecan phylloxera (Phylloxera devastatrix), Pecan leaf phylloxera (Phylloxera notabilis), and Southern pecan leaf phylloxera (Phylloxera russelae);

from the family Adelgidae, for example, hemlock woolly aphid (Adelges tsugae), balsam woolly aphid (Adelges piceae), and Aphrastasia pectinatae;

from the family Pentatomidae, for example, black rice bug (Scotinophara lurida), black paddy bug (Scotinophara coarctata), common green stink bug (Nezara antennata), white-spotted spined bug (Eysarcoris aeneus), lewis spined bug (Eysarcoris lewisi), white-spotted bug (Eysarcoris ventralis), Eysarcoris annamita, brown marmorated stink bug (Halyomorpha halys), green plant bug (Nezara viridula), brown stink bug (Euschistus heros), red banded stink bug (Piezodorus guildinii), Oebalus pugnax, Dichelops melacanthus and legume stink bug (Piezodorus hybneri);
from the family Cydnidae, for example, Scaptocoris castanea;
from the family Alydidae, for example, bean bug (Riptortus clavatus), corbett rice bug (Leptocorisa chinensis), and rice bug (Leptocorisa acuta);
from the family Coreidae, for example, Cletus punctiger and Australian leaf-footed bug (Leptoglossus australis);
from the family Lygaeidae, for example, oriental chinch bug (Cavelerius saccharivorus), seed bug (Togo hemipterus), and chinch bug (Blissus leucopterus);
from the family Miridae, for example, rice leaf bug (Trigonotylus caelestialium), sorghum plant bug (Stenotus rubrovittatus), wheat leaf bug (Stenodema calcarata), and American tarnished plant bug (Lygus lineolaris) ;
from the family Aleyrodidae, for example, greenhouse whitefly (Trialeurodes vaporariorum), tobacco whitefly (Bemisia tabaci), citrus whitefly (Dialeurodes citri), citrus spiny whitefly (Aleurocanthus spiniferus), tea spiny whitefly (Aleurocanthus camelliae), and Pealius euryae;
from the family Diaspididae, for example, Abgrallaspis cyanophylli, red scale (Aonidiella aurantii), San José scale (Diaspidiotus perniciosus), white peach scale (Pseudaulacaspis pentagona), arrowhead scale (Unaspis yanonensis), and citrus snow scale (Unaspis citri);
from the family Coccidae, for example, pink wax scale (Ceroplastes rubens);
from the family Margarodidae, for example, fluted scale (Icerya purchasi) and seychelles fluted scale (Icerya seychellarum);
from the family Pseudococcidae, for example, solanum mealybug (Phenacoccus solani), cotton mealybug (Phenacoccus solenopsis), Japanese mealybug (Planococcus kraunhiae), white peach scale (Pseudococcus comstocki), citrus mealybug (Planococcus citri), currant mealybug (Pseudococcus calceolariae), long-tailed mealybug (Pseudococcus longispinus), and tuttle mealybug (Brevennia rehi);
from the family Psyllidae, for example, citrus psylla (Diaphorina citri), two-spotted citrus psyllid (Trioza erytreae), pear sucker (Cacopsylla pyrisuga), Cacopsylla chinensis, potato psyllid (Bactericera cockerelli), and Pear psylla (Cacopsylla pyricola);
from the family Tingidae, for example, sycamore lace bug (Corythucha ciliata), aster tingid (Corythucha marmorata), Japanese pear lace bug (Stephanitis nashi), and azalea lace bug (Stephanitis pyrioides);
from the family Cimicidae, for example, common bed bug (Cimex lectularius) and tropical bed bug (Cimex hemipterus);
from the family Cicadidae, for example, Quesada gigas;
from the family Reduviidae, for example, Triatoma infestans, large kissing bug (Triatoma rubrofasciata), Triatoma dimidiata, and Rhodonius prolixus;
and the others.

Lepidoptera:

from the family Crambidae, for example, rice stem borer (Chilo suppressalis), Dark-headed stem borer (Chilo polychrysus), white stem borer (Scirpophaga innotata), yellow paddy borer (Scirpophaga incertulas), Rupela albina, rice leaf roller (Cnaphalocrocis medinalis), Marasmia patnalis, rice leaf roller (Marasmia exigua), cotton leaf roller (Notarcha derogata), corn borer (Ostrinia furnacalis), European corn borer (Ostrinia nubilalis), cabbage webworm (Hellula undalis), grape leafroller (Herpetogramma luctuosale), bluegrass webworm (Parapediasia teterrellus), rice case-worm (Nymphula depunctalis), Sugarcane borer (Diatraea saccharalis), and eggplant fruit borer (Leucinodes orbonalis);
from the family Pyralidae, for example, lesser cornstalk borer (Elasmopalpus lignosellus), mealworm moth (Plodia interpunctella), persimmon bark borer (Euzophera batangensis), and fig moth (Cadra cautella);
from the family Noctuidae, for example, cotton worm (Spodoptera litura), beet armyworm (Spodoptera exigua), rice armyworm (Mythimna separata), cabbage moth (Mamestra brassicae), pink borer (Sesamia inferens), grass armyworm (Spodoptera mauritia), green rice caterpillar (Naranga aenescens), Spodoptera frugiperda, true armyworm (Spodoptera exempta), Spodoptera cosmioides, semitropical armyworm (Spodoptera eridania), black cutworm (Agrotis ipsilon), turnip moth (Agrotis segetum), beet worm (Autographa nigrisigna), rice looper (Plusia festucae), Soybean looper (Chrysodeixis includens), Trichoplusia spp., Heliothis spp. (such as tobacco budworm (Heliothis virescens)), Helicoverpa spp. (such as tobacco budworm (Helicoverpa armigera), corn earworm (Helicoverpa zea)), velvet-bean caterpillar (Anticarsia gemmatalis), cotton leafworm (Alabama argillacea), and hop vine borer (Hydraecia immanis);

from the family Pieridae, for example, common cabbage worm (Pieris rapae) ;
from the family Tortricidae, for example, oriental fruit moth (Grapholita molesta), Grapholita dimorpha, soybean moth (Leguminivora glycinivorella), Matsumuraeses azukivora, summer fruit tortrix (Adoxophyes orana fasciata), smaller tea tortrix (Adoxophyes honmai), Japanese tea tortrix (Homona magnanima), apple tortrix (Archips fuscocupreanus), codling moth (Cydia pomonella), sugarcane shoot borer (Tetramoera schistaceana), bean shoot borer (Epinotia aporema), citrus fruit borer (Citripestis sagittiferella), and European grapevine moth (Lobesia botrana);
from the family Gracillariidae, for example, tea leaf roller (Caloptilia theivora) and Asiatic apple leaf miner (Phyllonorycter ringoniella);
from the family Carposinidae, for example, peach fruit moth (Carposina sasakii);
from the family Lyonetiidae, for example, coffee leaf miner (Leucoptera coffeella), peach leaf miner (Lyonetia clerkella), and Lyonetia prunifoliella;
from the family Lymantriidae, for example, Lymantria spp. (such as gypsy moth (Lymantria dispar)) and Euproctis spp. (such as tea lymantriid (Euproctis pseudoconspersa));
from the family Plutellidae, for example, diamondback moth (Plutella xylostella);
from the family Gelechiidae, for example, peach worm (Anarsia lineatella), sweetpotato leaf folder (Helcystogramma triannulella), pink bollworm (Pectinophora gossypiella), potato moth (Phthorimaea operculella), and tomato leafminer (Tuta absoluta);
from the family Arctiidae, for example, American white moth (Hyphantria cunea);
from the family Castniidae, for example, giant sugarcane borer (Telchin licus);
from the family Cossidae, for example, Cossus insularis;
from the family Geometridae, for example, Ascotis selenaria;
from the family Limacodidae, for example, blue-striped nettle grub (Parasa lepida);
from the family Stathmopodidae, for example, persimmon fruit moth (Stathmopoda masinissa);
from the family Sphingidae, for example, tobacco hornworm (Acherontia lachesis);
from the family Sesiidae, for example, Nokona feralis, cherry borer (Synanthedon hector), and Synanthedon tenuis:

from the family Hesperiidae, for example, rice skipper (Parnara guttata);
from the family Tineidae, for example, casemaking clothes moth (Tinea translucens), common clothes moth (Tineola bisselliella);
and the others.

Thysanoptera:

from the family Thripidae, for example, western flower thrips (Frankliniella occidentalis), oriental thrips (Thrips palmi), yellow tea thrips (Scirtothrips dorsalis), onion thrips (Thrips tabaci), eastern flower thrips (Frankliniella intonsa), rice thrips (Stenchaetothrips biformis), Echinothrips americanus, and avocado thrips (Scirtothrips perseae);
from the family Phlaeothripidae, for example, aculeated rice thrips (Haplothrips aculeatus);
and the others.

Diptera:

from the family Anthomyiidae, for example, seedcorn maggot (Delia platura), onion maggot (Delia antiqua), and beet leaf miner (Pegomya cunicularia);
from the family Ulidiidae, for example, sugarbeet root maggot (Tetanops myopaeformis);
from the family Agromyzidae, for example, rice leaf miner (Agromyza oryzae), tomato leaf miner (Liriomyza sativae), chrysanthemum leaf miner (Liriomyza trifolii), and pea leafminer (Chromatomyia horticola);
from the family Chloropidae, for example, rice stem maggot (Chlorops oryzae);
from the family Tephritidae, for example, melon fly (Bactrocera cucurbitae), oriental fruit fly (Bactrocera dorsalis), Malaysian fruit fly (Bactrocera latifrons), olive fruit fly (Bactrocera oleae), Queensland fruit fly (Bactrocera tryoni), Mediterranean fruit fly (Ceratitis capitata), apple maggot (Rhagoletis pomonella), and Japanese cherry fruit fly (Rhacochlaena japonica);
from the family Ephydridae, for example, smaller rice leaf miner (Hydrellia griseola), whorl maggot (Hydrellia philippina), and paddy stem maggot (Hydrellia sasakii);
from the family Drosophilidae, for example, cherry drosophila (Drosophila suzukii), and common fruit fly (Drosophila melanogaster);
from the family Phoridae, for example, Megaselia spiracularis;
from the family Psychodidae, for example, Clogmia albipunctata;
from the family Sciaridae, for example, Bradysia difformis and Bradysia odoriphaga;

from the family Cecidomyiidae, for example, hessian fly (Mayetiola destructor) and paddy gall fly (Orseolia oryzae);
from the family Diopsidae, for example, Diopsis macrophthalma;
from the family Glossinidae, for example, Glossina palpalis and Glossina morsitans;
from the family Simuliidae, for example, Simulium japonicum and Simulium damnosum;
from the subfamily Phlebotominae;
from the family Tipulidae, for example, rice crane fly (Tipula aino), common cranefly (Tipula oleracea), and European cranefly (Tipula paludosa) ;
from the family Culicidae, for example, common house mosquito (Culex pipiens pallens), Culex tritaeniorhynchus ,Culex pipiens f. molestus, southern house mosquito (Culex quinquefasciatus), northern house mosquito (Culex pipiens pipiens), Culex vishnui, Asian tiger mosquito (Aedes albopictus), dengue mosquito (Aedes aegypti), Chinese malaria mosquito (Anopheles sinensis), Anopheles gambiae, Anopheles stephensi, Anopheles coluzzii, Anopheles albimanus, Anopheles sundaicus, Anopheles arabiensis, Anopheles funestus, Anopheles darlingi, Anopheles farauti, and Anopheles minimus;
from the family Simulidae, for example, Prosimulium yezoensis and Simulium ornatum;
from the family Tabanidae, for example, Tabanus trigonus;
from the family Muscidae, for example, housefly (Musca domestica), false stable fly (Muscina stabulans), biting house fly (Stomoxys calcitrans), and buffalo fly (Haematobia irritans);
from the family Calliphoridae;
from the family Sarcophagidae;
from the family Chironomidae, for example, Chironomus plumosus, Chironomus yoshimatsui, and Glyptotendipes tokunagai;
from the family Fannidae;
and the others.

Coleoptera:

from the family Chrysomelidae, for example, Diabrotica spp. (such as western corn rootworm (Diabrotica virgifera virgifera), southern corn rootworm (Diabrotica undecimpunctata howardi), northern corn rootworm (Diabrotica barberi), Mexican corn rootworm (Diabrotica virgifera zeae), banded cucumber beetle (Diabrotica balteata), cucurbit beetle(Diabrotica speciosa)), bean leaf beetle (Cerotoma trifurcata), barley leaf beetle (Oulema melanopus), cucurbit leaf beetle (Aulacophora femoralis), striped flea beetle (Phyllotreta striolata), cabbage flea beetle (Phyllotreta cruciferae), western black flea beetle (Phyllotreta pusilla), cabbage stem flea beetle (Psylliodes chrysocephala), hop flea beetle (Psylliodes punctulata), Colorado potato beetle (Leptinotarsa decemlineata), rice leaf beetle (Oulema oryzae), grape colaspis (Colaspis brunnea), corn flea beetle (Chaetocnema pulicaria), sweet-potato flea beetle (Chaetocnema confinis), potato flea beetle (Epitrix cucumeris), rice leaf beetle (Dicladispa armigera), southern corn leaf beetle (Myochrous denticollis), Laccoptera quadrimaculata, tobacco flea beetle (Epitrix hirtipennis), daikon leaf beetle (Phaedon brassicae) and two-striped leaf beetle (Medythia nigrobilineata);
from the family Carabidae, for example, Seedcorn beetle (Stenolophus lecontei) and slender seed-corn ground beetle (Clivina impressifrons);
from the family Scarabaeidae, for example, cupreus chafer (Anomala cuprea), soybean beetle (Anomala rufocuprea), Anomala albopilosa, Japanese beetle (Popillia japonica), yellowish elongate chafer (Heptophylla picea), European Chafer (Rhizotrogus majalis), Tomarus gibbosus, Holotrichia spp., Phyllophaga spp. (such as June beetle (Phyllophaga crinita)), and Diloboderus spp. (such as Diloboderus abderus);
from the family Anthriibidae, for example, coffee bean weevil ( Araecerus coffeae);
from the family Aponidae, for example, sweet-potato weevil (Cylas formicarius);
from the family Bruchidae, for example, Mexican bean weevil (Zabrotes subfasciatus) ;
from the family Scolytidae, for example, pine beetle (Tomicus piniperda) and coffee berry borer (Hypothenemus hampei);
from the family Curculionidae, for example, West Indian sweet-potato weevil (Euscepes postfasciatus), alfalfa weevil (Hypera postica), maize wevil (Sitophilus zeamais), rice weevil (Sitophilus oryzae), grain weevil (Sitophilus granarius), rice plant weevil (Echinocnemus squameus), rice water weevil (Lissorhoptrus oryzophilus), Rhabdoscelus lineaticollis, boll weevil (Anthonomus grandis), nunting billbug (Sphenophorus venatus), southern corn billbug (Sphenophorus callosus), soybean stalk weevil (Sternechus subsignatus), sugarcane weevil (Sphenophorus levis), rusty gourd-shaped weevil (Scepticus griseus), brown gourd-shaped weevil (Scepticus uniformis), Aracanthus spp. (such as Aracanthus mourei), and cotton root borer (Eutinobothrus brasiliensis);
from the family Tenebrionidae, for example, red meal beetle (Tribolium castaneum), mason beetle (Tribolium confusum), and lesser mealworm (Alphitobius diaperinus);
from the family Coccinellidae, for example, twenty-eight-spotted ladybird (Epilachna vigintioctopunctata);

from the family Bostrychidae, for example, common powder-post beetle (Lyctus brunneus), and lesser grain borer (Rhizopertha dominica);
from the family Ptinidae;
from the family Cerambycidae, for example, citrus long-horned beetle (Anoplophora malasiaca), Migdolus fryanus, and peach borer (Aromia bungii);
from the family Elateridae, for example, Melanotus okinawensis, barley wireworm (Agriotes fuscicollis), Melanotus legatus, Anchastus spp., Conoderus spp., Ctenicera spp., Limonius spp., and Aeolus spp.;
from the family Staphylinidae, for example, Paederus fuscipes;
from the family Dermestidae, for example, varied carpet beetle (Anthrenus verbasci), hide beetle (Dermestes maculates), and khapra beetle (Trogoderma granarium);
from the family Anobiidae, for example, tobacco beetle (Lasioderma serricorne), and biscuit beetle (Stegobium paniceum);
from the family Laemophloeidae, for example, flat grain beetle (Cryptolestes ferrugineus);
from the family Silvanidae, for example, saw-toothed grain beetle (Oryzaephilus surinamensis);
from the family Nitidulidae, for example, blossom beetle (Brassicogethes aeneus);
and the others.

Orthoptera:

from the family Acrididae, for example, oriental migratory locust (Locusta migratoria), Moroccan locust (Dociostaurus maroccanus), Australian plague locust (Chortoicetes terminifera), red locust (Nomadacris septemfasciata), brown locust (Locustana pardalina), tree locust (Anacridium melanorhodon), Italian locust (Calliptamus italicus), differential grasshopper (Melanoplus differentialis), two-striped grasshopper (Melanoplus bivittatus), migratory grasshopper (Melanoplus sanguinipes), red-legged grasshopper (Melanoplus femurrubrum), clear-winged grasshopper (Camnula pellucida), desert locust (Schistocerca gregaria), Yellow-winged locust(Gastrimargus musicus), spur-throated locust (Austracris guttulosa), Japanese grasshopper (Oxya yezoensis), rice grasshopper (Oxya japonica), and Bombay locust (Patanga succincta);
from the family Gryllotalpidae, for example, oriental mole cricket (Gryllotalpa orientalis);
from the family Gryllidae, for example, house cricket (Acheta domestica), and emma field cricket (Teleogryllus emma);
from the family Tettigoniidae, for example, mormon cricket (Anabrus simplex) ;
and the others.

Hymenoptera :

from the family Tenthredinidae, for example, beet sawfly (Athalia rosae) and nippon cabbage sawfly (Athalia japonica);
from the family Formicidae, for example, Solenopsis spp. (such as red imported fire ant (Solenopsis invicta), tropical fire ant (Solenopsis geminata)), Atta spp. (such as brown leaf-cutting ant (Atta capiguara), Acromyrmex spp., Paraponera clavata, black house ant (Ochetellus glaber), little red ant (Monomorium pharaonis), Argentine ant (Linepithema humile), Formica japonica, Pristomyrmex punctutus, Pheidole noda, big-headed ant (Pheidole megacephala), Camponotus spp. (such as Camponotus japonicus, Camponotus obscuripes), Pogonomyrmex spp. (such as western harvester ant (Pogonomyrmex occidentalis)), Wasmania spp. (such as Wasmania auropunctata), and long-legged ant (Anoplolepis gracilipes);
from the family Vespidae, for example, Asian giant hornet (Vespa mandarinia, Vespa simillima, Vespa analis, Asian hornet (Vespa velutina), and Polistes jokahamae;
from the family Siricidae, for example, pine wood wasp (Urocerus gigas);
from the family Bethylidae;
and the others.

Blattodea :

from the family Ectobiidae, for example, German cockroach (Blattella germanica);
from the family Blattidae, for example, smoky-brown cockroach (Periplaneta fuliginosa), American cockroach (Periplaneta americana), Australian cockroach (Periplaneta australasiae) , brown cockroach (Periplaneta brunnea), and black cockroach (Blatta orientalis);
from the family Termitidae, for example, Japanese termite (Reticulitermes speratus), Formosan termite (Coptotermes formosanus), western drywood termite (Incisitermes minor), Cryptotermes domesticus, Odontotermes formosanus, Neotermes koshunensis, Glyptotermes satsumensis, Glyptotermes nakajimai, Glyptotermes fuscus, Hodotermopsis

sjostedti, Coptotermes guangzhouensis, Reticulitermes amamianus, Reticulitermes miyatakei, Reticulitermes kanmonensis, Nasutitermes takasagoensis, Pericapritermes nitobei, Sinocapritermes mushae, and Cornitermes cumulans;
and the others.

Siphonaptera:

from the family Pulicidae, for example, human flea (Pulex irritans), cat flea (Ctenocephalides felis), dog flea (Ctenocephalides canis), oriental rat flea (Xenopsylla cheopis), and chicken flea (Echidnophaga gallinacea);
from the family Hectopsyllidae, for example, chigoe flea (Tunga penetrans);
from the family Ceratophyllidae, for example, European rat flea (Nosopsyllus fasciatus); and the others.

Psocodae:

from the family Pediculidae, for example, head louse (Pediculus humanus capitis);
from the family Pthiridae, for example, crab louse (Pthirus pubis);
from the family Haematopinidae, for example, short-nosed cattle louse (Haematopinus eurysternus) and pig louse (Haematopinus suis);
from the family Linognathidae, for example, blue cattle louse (Linognathus vituli), sheep face louse (Linognathus ovillus), and capillate louse (Solenopotes capillatus);
from the family Bovicoliidae, for example, cattle biting louse (Bovicola bovis), sheep biting louse (Bovicola ovis), Bovicola breviceps, Damalinia forficula, and Werneckiella spp.;
from the family Trichodectidae, for example, dog biting louse (Trichodectes canis) and cat louse (Felicola subrostratus);
from the family Menoponidae, for example, common chicken louse (Menopon gallinae), chicken body louse (Menacanthus stramineus), and Trinoton spp;
from the family Trimenoponidae, for example, Cummingsia spp.;
from the family Trogiidae, for example, death watch (Trogium pulsatorium);
from the family Liposcelidae or Liposcelididae, for example, book louse (Liposcelis corrodens), Liposcelis bostrychophila, Liposcelis pearmani and Liposcelis entomophila;
and the other.

Thysanura:

from the family Lepismatidae, for example, oriental silverfish (Ctenolepisma villosa) andmoth fish (Lepisma saccharina);
and the others.

Acari:

from the family Tetranychidae, for example, common red spider mite (Tetranychus urticae), kanzawa spider mite (Tetranychus kanzawai), red spider mite (Tetranychus evansi), citrus red mite (Panonychus citri), fruit-tree red spider mite (Panonychus ulmi), and Oligonychus spp.;
from the family Eriophyidae, for example, Japanese citrus rust mite (Aculops pelekassi), Phyllocoptruta citri, tomato mite (Aculops lycopersici), purple mite (Calacarus carinatus), tea rust mite (Acaphylla theavagrans), Eriophyes chibaensis, apple bud mite (Aculus schlechtendali), Aceria diospyri, Aceria tosichella, and Shevtchenkella sp.;
from the family Tarsonemidae, for example, broad mite (Polyphagotarsonemus latus);
from the family Tenuipalpidae, for example, Brevipalpus phoenicis;
from the family Tuckerellidae;
from the family Ixodidae, for example, Asian longhorned tick (Haemaphysalis longicornis), Haemaphysalis flava, Haemaphysalis japonica, Haemaphysalis campanulata, American dog tick (Dermacentor variabilis), Dermacentor taiwanensis, Rocky Mountain wood tick (Dermacentor andersoni), netted tick (Dermacentor reticulatus), Ixodes ovatus, Ixodes persulcatus, black-legged tick (Ixodes scapularis), Ixodes pacificus, Ixodes holocyclus, Ixodes ricinus, lone star tick (Amblyomma americanum), gulf coast tick (Amblyomma maculatum), Rhipicephalus microplus, cattle tick (Rhipicephalus annulatus), brown dog tick (Rhipicephalus sanguineus), Rhipicephalus appendiculatus, and Rhipicephalus decoloratus;
from the family Argasidae, for example, fowl tick (Argas persicus), Ornithodoros hermsi, and Ornithodoros turicata;
from the family Acaridae, for example, cereal mite (Tyrophagus putrescentiae) and grassland mite (Tyrophagus

similis);
from the family Pyroglyphidae, for example, American house dust mite (Dermatophagoides farinae) and European house dust mite (Dermatophagoides pteronyssinus);
from the family Cheyletidae, for example, Cheyletus eruditus, Cheyletus malaccensis, Chelacaropsis moorei, and Cheyletiella yasguri;
from the family Psoroptidae, for example, sheep scab mite (Psoroptes ovis), horse psoroptic mange mite (Psoroptes equi), Knemidocoptes mutans, ear mange mite (Otodectes cynotis), and Chorioptes spp.;
from the family Sarcoptidae, for example, Notoedres cati, Notoedres muris, and itch mite (Sarcoptes scabiei);
from the family Listrophoridae, for example, Listrophorus gibbus;
from the family Dermanyssidae, for example, bird mite (Dermanyssus gallinae);
from the family Macronyssidae, for example, feather mite (Ornithonyssus sylviarum) and tropical rat mite (Ornithonyssus bacoti);
from the family Varroidae, for example, Varroa jacobsoni;
from the family Demodicidae, for example, dog follicle mite (Demodex canis) and cat follicle mite (Demodex cati);
from the family Trombiculidae, for example, Leptotrombidium akamushi, Leptotrombidium pallidum, and Leptotrombidium scutellare;
and the others.

Araneae:

from the family Eutichuridae, for example, Cheiracanthium japonicum;
from the family Theridiidae, for example, red-back spider (Latrodectus hasseltii);
and the others

Polydesmida:

from the family Paradoxosomatidae, for example, flat-backed millipede (Oxidus gracilis) and Nedyopus tambanus;
and the others.

Isopoda:

from the family Armadillidiidae, common pill bug (Armadillidium vulgare);
and the others.

Chilopoda:

from the family Scutigeridae, for example, Thereuonema hilgendorfi;
from the family Scolopendridae, giant tropical centipede (Scolopendra subspinipes);
from the family Ethopolyidae, Bothropolys rugosus;
and the others.

Gastropoda:

from the family Limacidae, for example, tree slug (Limax marginatus) and garden tawny slug (Limax flavus);
from the family Philomycidae, for example, Meghimatium bilineatum;
from the family Ampullariidae, for example, golden apple snail (Pomacea canaliculata);
from the family Lymnaeidae, for example, Austropeplea ollula;
and the others.

Nematoda:

from the family Aphelenchoididae, for example, rice white-tip nematode (Aphelenchoides besseyi);
from the family Pratylenchidae, for example, root lesion nematode (Pratylenchus coffeae), Pratylenchus brachyurus, California meadow nematode (Pratylenchus neglectus), and Radopholus similis;
from the family Heteroderidae, for example, javanese root-knot nematode (Meloidogyne javanica), southern root-knot nematode (Meloidogyne incognita), guava root-knot nematodes (Meloidogyne enterolobii), northern root-knot nematode (Meloidogyne hapla), soybean cyst nematode (Heterodera glycines), potato cyst nematode (Globodera rostochiensis), white potato cyst nematode (Globodera pallida), and Columbia root-knot nematode (Meloidogyne

chitwoodi);
from the family Hoplolaimidae, for example, Rotylenchulus reniformis;
from the family Anguinidae, for example, strawberry bud nematode (Nothotylenchus acris), and stem nematode (Ditylenchus dipsaci);
from the family Tylenchulidae, for example, citrus nematode (Tylenchulus semipenetrans);
from the family Longidoridae, for example, dagger nematode (Xiphinema index) ;
from the family Trichodoridae;
from the family Parasitaphelenchidae, for example, pine wilt disease (Bursaphelenchus xylophilus);
and the others.

Harmful arthropods such as insect pests and harmful mites, harmful mollusks, and harmful nematodes may be harmful arthropods such as insect pests and harmful mites, harmful mollusks, and harmful nematodes that have reduced susceptibility to or developed resistance to chemicals such as insecticides, miticides, molluscicides, or nematicides.

The method for controlling harmful arthropods of the present invention is carried out by applying an effective amount of the composition of the present invention or Composition A directly to the harmful arthropods and/or to their habitats (such as plants, soil, houses, animals, etc.). Examples of the methods for controlling harmful arthropods of the present invention include foliage treatment, soil treatment, root treatment, shower treatment, fumigation treatment, water surface treatment, and seed treatment.

The composition of the present invention or Composition A is usually used by mixing it with inert carrier(s) such as solid carrier(s), liquid carrier (s) or gaseous carrier (s), surfactant(s), and the like, and as needed, adding thereto auxiliary agent(s) for formulation such as binder(s), dispersant(s), and stabilizer(s) to be formulated into an aqueous suspension formulation, an oil-based suspension formulation, an oil solution, an emulsifiable concentrate, an emulsion formulation, a microemulsion formulation, a microcapsule formulation, a wettable powder, a water dispersible granule, a dustable powder, a granule, a tablet, an aerosol formulation, a resin formulation or the like. In addition to these formulations, they may be used by formulating into formulation types described in Manual on development and use of FAO and WHO Specifications for pesticides, FAO Plant Production and Protection Papers- 271-276, prepared by the FAO/WHO Joint Meeting on Pesticide Specifications, 2016, ISSN:0259-2517.

These formulations usually contain 0.0001 to 99% of the composition of the present invention or Composition A by weight ratio.

Examples of solid carriers include fine powders and granules of clays (for example, pyrophyllite clay and kaolin clay), talc, calcium carbonate, diatomaceous earth, zeolite, bentonite, acid white clay, attapulgite, white carbon, ammonium sulfate, vermiculite, perlite, pumice, silica sand, chemical fertilizers (for example, ammonium sulfate, ammonium phosphate, ammonium nitrate, urea, and ammonium chloride), and the others; as well as resins (for example, polyethylene, polypropylene, polyesters, polyurethanes, polyamides, and polyvinyl chloride) .

Examples of liquid carriers include water, alcohols (for example, ethanol, cyclohexanol, benzyl alcohol, propylene glycol, and polyethylene glycol), ketones (for example, acetone and cyclohexanone), aromatic hydrocarbons (for example, xylene, phenyl xylyl ethane, and methylnaphthalene), aliphatic hydrocarbons (for example, hexane and cyclohexane), esters (for example, ethyl acetate, methyl oleate, and propylene carbonate), nitriles (for example, acetonitrile), ethers (for example, ethylene glycol dimethyl ether), amides (for example, N,N-dimethylformamide and N,N-dimethyloctanamide), sulfoxides (for example, dimethyl sulfoxide), lactams (for example, N-methylpyrrolidone and N-octylpyrrolidone), fatty acids (for example, oleic acid), and vegetable oils (for example, soybean oil).

Examples of gaseous carriers include, fluorocarbons, butane gas, LPG (liquefied petroleum gas), dimethyl ether, nitrogen, and carbon dioxide.

Examples of surfactants include nonionic surfactants (for example, polyoxyethylene alkyl ethers, polyoxyethylene alkyl aryl ethers, and polyethylene glycol fatty acid esters), and anionic surfactants (for example, alkyl sulfonates, alkyl aryl sulfonates, and alkyl sulfates).

Examples of other auxiliary agents for formulation include binders, dispersants, colorants, and stabilizers, and the specific examples thereof include polysaccharides (for example, starch, gum arabic, cellulose derivatives, and alginic acid), lignin derivatives, water-soluble synthetic polymers (for example, polyvinyl alcohol, polyvinyl pyrrolidone, and polyacrylic acids), acidic isopropyl phosphate, and dibutylhydroxytoluene.

An adjuvant can be used as a component to enhance or supplement the efficacy of the active ingredient. Specific examples thereof include Nimbus (registered trademark), Assist (registered trademark), Aureo (registered trademark), Iharol (registered trademark), Silwet L-77 (registered trademark), BreakThru (registered trademark), SundanceII (registered trademark), Induce (registered trademark), Penetrator (registered trademark), AgriDex (registered trademark), Lutensol A8 (registered trademark), NP-7 (registered trademark), Triton (registered trademark), Nufilm (registered trademark), Emulgator NP7 (registered trademark), Emulad (registered trademark), TRITON X 45 (registered trademark), AGRAL 90 (registered trademark), AGROTIN (registered trademark), ARPON (registered trademark), EnSpray N (registered trademark), and BANOLE (registered trademark).

In the present invention, examples of plants include the whole plant, stems and leaves, flowers, ears, fruits, tree stems, branches, crowns, seeds, vegetative reproductive organs, and seedlings.

Vegetative reproduction organs mean those among roots, stems, leaves, and the like of plants that have the ability to grow even when said part is separated from the plant body and placed into soil. Examples of vegetative reproduction organs include tuberous roots, creeping roots, bulbs, corms or solid bulbs, tubers, rhizomes, stolons, rhizophores, cane cuttings, propagules, and vine cuttings. A stolon is also referred to as a "runner", and a propagule is also referred to as a "propagulum" and categorized into a broad bud and a bulbil. A vine cutting means a shoot (collective term for leaf and stem) of sweet potato, glutinous yam, or the like. Bulbs, corms or solid bulbs, tubers, rhizomes, cane cuttings, rhizophores, and tuberous roots are also collectively referred to as "bulbs". Cultivation of potatos starts with planting a tuber into soil, and the tuber used is generally referred to as a "seed potato".

Examples of the methods for controlling harmful arthropods by applying an effective amount of the composition of the present invention or Composition A to soils include methods of applying an effective amount of the composition of the present invention or Composition A to soils before planting plants or after planting plants. Specific examples thereof include planting hole treatment (spraying into planting holes, soil mixing after planting hole treatment), plant foot treatment (plant foot spraying, soil mixing after plant foot treatment, irrigation at plant foot, plant foot treatment at a later seeding raising stage), planting furrow treatment (planting furrow spraying, soil mixing after planting furrow treatment), planting row treatment (planting row spraying, soil mixing after planting row treatment, planting row spraying at a growing stage), planting row treatment at the time of sowing (planting row spraying at the time of sowing, soil mixing after planting row treatment at the time of sowing), broadcast treatment (overall soil surface spraying, soil mixing after broadcast treatment), side-article treatment, treatment of water surface (application to water surface, application to water surface after flooding), other soil spraying treatment (spraying of a granular formulation on leaves at a growing stage, spraying under a canopy or around a tree stem, spraying on the soil surface, mixing with surface soil, spraying into seed holes, spraying on the ground surfaces of furrows, spraying between plants), other irrigation treatment (soil irrigation, irrigation at a seedling raising stage, chemical liquid injection treatment, irrigation of a plant part just above the ground, chemical liquid drip irrigation, chemigation), seedling raising box treatment (spraying into a seedling raising box, irrigation of a seedling raising box, flooding into a seedling raising box with chemical liquid), seedling raising tray treatment (spraying on a seedling raising tray, irrigation of a seedling raising tray, flooding into a seedling raising tray with chemical liquid), seedbed treatment (spraying on a seedbed, irrigation of a seedbed, spraying on a lowland rice nursery, immersion of seedlings), seedbed soil incorporation treatment (mixing with seedbed soil, mixing with seedbed soil before sowing, spraying at sowing before covering with soils, spraying at sowing after covering with soils, mixing with covering with soils), and other treatment (mixing with culture soil, plowing under, mixing with surface soil, mixing with soil at the place where raindrops fall from a canopy, treatment at a planting position, spraying of a granule formulation on flower clusters, mixing with a paste fertilizer).

Examples of seed treatments include applications of the composition of the present invention or Composition A to seeds or vegetative reproductive organs, and detailed examples thereof include spraying treatment in which a suspension of the composition of the present invention or Composition A is sprayed onto the seed surface or vegetative reproductive organ surface in the form of mist; smearing treatment in which the composition of the present invention or Composition A is coated on the surface of seeds or vegetative reproductive organs; soaking treatment in which seeds or vegetative reproductive organs are soaked into a chemical liquid of the composition of the present invention or Composition A for a certain time period; and a method for coating seeds or vegetative reproductive organs with a carrier containing the composition of the present invention or Composition A (film coating treatment, pellet coating treatment etc.). Examples of the above-described vegetative reproductive organs include particularly seed potatos.

When treating seeds or vegetative reproductive organs with Composition A, Composition A may be applied to the seeds or vegetative reproductive organs as a single formulation, or may be applied to the seeds or vegetative reproductive organs multiple times as several different formulations. Examples of methods for applying Composition A multiple times as different formulations include: a method in which a formulation containing only the composition of the present invention as the active ingredient is applied, and after air-drying the seeds or vegetative reproductive organs, a formulation containing Present ingredient(s) is applied; and a method in which a formulation containing both the composition of the present invention and Present ingredient(s) as active ingredients is applied, and after air-drying the seeds or vegetative reproductive organs, a formulation containing Present ingredient(s) other than the already applied Present ingredient(s) is applied.

In the present invention, seeds or vegetative reproductive organs holding the composition of the present invention or Composition A mean those in the state where the composition of the present invention or Composition A is adhered to the surface of the seeds or vegetative reproductive organs. The above-described seeds or vegetative reproductive organs holding the composition of the present invention or Composition A may be adhered by any other materials that are different from the composition of the present invention or Composition A before or after being adhered the composition of the present invention or Composition A to the seeds or vegetative reproductive organs.

Also, when Composition A is adhered in a form of layer(s) to the surface of seeds or vegetative reproductive organs, the layer(s) is/are composed of one layer or a multiple layers. Also, when composed of multiple layers, each of the

layers may be layer(s) containing one or more active ingredients, or a combination of layer (s) containing one or more active ingredients and layer(s) containing no active ingredient.

Seeds or vegetative reproductive organs holding the composition of the present invention or Composition A can be obtained, for example, by applying the formulations containing the composition of the present invention or Composition A to seeds or vegetative reproductive organs by methods of the above-described seed treatments.

When the composition of the present invention or Composition A is used for controlling harmful arthropods in the agricultural field, the application amount is usually 1 to 10,000 g per 10,000 $m^2$ in terms of the amount of the composition of the present invention. When treating seeds or vegetative reproductive organs, it is applied at the amount of the composition of the present invention ranging from 0.001 to 100 g relative to 1 kg of seeds or vegetative reproductive organs. If the composition of the present invention or Composition A is formulated as an emulsifiable concentrate, a wettable powder, a flowable formulation, or the like, it is usually diluted with water so that the active ingredient concentration is 0.01 to 10,000 ppm to apply, and granules, dustable powders, or the like are usually applied as they are.

Furthermore, the composition of the present invention or Composition A can also be processed into resin formulations in the form of sheets or strings and applied by wrapping around crops, stretching near crops, or laying on the soil at the plant foot.

When the composition of the present invention or Composition A is used for controlling harmful arthropods inhabiting inside houses, the application amount, when applied to surfaces, is usually 0.01 to 1,000 mg per 1 $m^2$ of treated area in terms of the amount of the composition of the present invention, and when applied to space, it is usually 0.01 to 500 mg per 1 $m^3$ of treated space in terms of the amount of the composition of the present invention. If the composition of the present invention or Composition A is formulated as an emulsifiable concentrate, a wettable powder, a flowable formulation, or the like, it is usually diluted with water so that the active ingredient concentration is 0.1 to 10,000 ppm to apply, while oil formulations, aerosol formulations, fumigants, poisonous baits, and the like are generally applied as they are.

When the composition of the present invention or Composition A is used for controlling external parasites of livestock such as cattle, horses, pigs, sheep, goats, chickens, or small animals such as dogs, cats, rats, and mice, it can be administered to animals by methods known in veterinary medicine. Specific examples of usage methods include administration in the form of a tablet, incorporation-into-feed, a suppository, or an injection (intramuscular, subcutaneous, intravenous, intraperitoneal, etc.) for systemic control, and spraying, pour-on treatment or spot-on treatment with an oil formulation or an aqueous liquid formulation, washing with a shampoo formulation, or attaching a resin formulation as a collar or an ear tag for non-systemic control. The amount of the composition of the present invention or Composition A administered to animals is usually in the range of 0.1 to 1,000 mg per 1 kg of the animal body weight.

The composition of the present invention or Composition A may be used as an agent for controlling harmful arthropods in agricultural lands such as fields, paddy fields, turfs, and orchards. Examples of plants include the followings.

Corn (dent corn, flint corn, flour corn, popcorn, waxy corn, sweet corn, and field corn), rice (long grain rice, short grain rice, medium grain rice, japonica rice, tropical japonica rice, indica rice, javanica rice, paddy rice, upland rice, floating rice, direct-seeded rice, transplanted rice, and glutinous rice), wheat (bread wheat (hard wheat, soft wheat, medium wheat, red wheat, and white wheat), durum wheat, spelt wheat, and club wheat, winter wheat and spring wheat of them), barley (two-rowed barley (= barley for brewery), six-rowed barley, hull-less barley, and pearl barley, winter barley and spring barley of them), rye (winter rye and spring rye), triticale (winter triticale and spring triticale), oat (winter oat and spring oat), sorghum, cotton (upland cotton and Pima cotton), soybean (ripe seed harvest soybean, green soybeans, and early harvest soybeans, indeterminate type, determinate type, and semi-determinate type of them), peanut, buckwheat, beet (beets for sugar production, beets for feed, beets for root vegetable, beets for leaf vegetable, and beets for fuel), rapeseed (winter rapeseed and spring rapeseed), canola (winter canola and spring canola), sunflower (sunflowers for oil extraction, edible sunflowers, and sunflowers for ornamental purpose), sugar cane, tobacco, tea, mulberry, solanaceous vegetables (for example, eggplant, tomato, green pepper, pepper, and potato), cucurbitaceous vegetables (for example, cucumber, pumpkin, zucchini, water melon, and melon), cruciferous vegetables (for example, Japanese radish, white turnip, horseradish, kohlrabi, Chinese cabbage, cabbage, leaf mustard, broccoli, and cauliflower), asteraceous vegetables (for example, burdock, crown daisy, artichoke, and lettuce), liliaceous vegetables (for example, welsh onion, onion, garlic, and asparagus), ammiaceous vegetables (for example, carrot, parsley, celery, and parsnip), chenopodiaceous vegetables (for example, spinach and Swiss chard), lamiaceous vegetables (for example, perilla, mint, and basil), strawberry, sweet potato, glutinous yam, eddoe, pomaceous fruits (for example, apple, pear, Japanese pear, Chinese white pear, Chinese quince, and quince), stone fleshy fruits (for example, peach, plum, nectarine, Japanese apricot (Prunus mume), cherry fruit, apricot, and prune), citrus fruits (for example, Citrus unshiu, orange, lemon, lime, and grapefruit), nuts (for example, chestnuts, walnuts, hazelnuts, almond, pistachio, cashew nuts, and macadamia nuts), berry fruits (for example, blueberry, cranberry, blackberry, and raspberry), grapes, Japanese persimmon, fig, olive, Japanese plum, banana, coffee, date palm, coconuts, ornamental plants, forest plants, turfs, and grasses.

The above plants are not specifically limited as long as they are generally cultivated cultivars. The above plants also include plants which may be produced by natural breeding, plants which may be generated by mutation, F1 hybrid

plants, and genetically modified crops. Examples of genetically modified crops include plants to which tolerance to herbicides, such as HPPD (4-hydroxyphenylpyruvate dioxygenase enzyme) inhibitors such as isoxaflutole, ALS (acetolactate synthase) inhibitors such as imazethapyr and thifensulfuron-methyl, EPSP (5-enolpyruvylshikimate-3-phosphate synthase) inhibitors, glutamine synthetase inhibitors, PPO (protoporphyrinogen oxidase) inhibitors, bromoxynil or dicamba, has been imparted; plants which become able to synthesize a selective toxin known in Bacillus spp. such as Bacillus thuringiensis or the like; and plants which can synthesize a gene fragment or the like which is partially identical to an endogenous gene derived from a harmful insect, thereby inducing a gene silencing (RNAi; RNA interference) in the target harmful insect body to impart a specific insecticidal activity.

[Examples]

Hereinafter, the present invention will be explained in further detail by presenting preparation examples and test examples, however, the present invention is not limited to these examples.

Examples 1 to 10 and Comparative Examples 1 to 6 (Preparation of Compositions for Resin Formulation)

Each component was mixed so that the compositions corresponded to those shown in Table 1 to prepare compositions for resin formulation.

[Table 1]

Table 1

| | Synthetic pyrethroid compound | Amount [mg] | Antioxidant | Amount [mg] |
|---|---|---|---|---|
| Example 1 | metofluthrin | 0.9 | 1 | 0.27 |
| Example 2 | metofluthrin | 0.9 | 2 | 0.27 |
| Comparative Example 1 | metofluthrin | 0.9 | 3 | 0.27 |
| Example 3 | dimefluthrin | 0.9 | 1 | 0.18 |
| Example 4 | dimefluthrin | 0.9 | 2 | 0.18 |
| Comparative Example 2 | dimefluthrin | 0.9 | 4 | 0.18 |
| Example 5 | d-phenothrin | 0.3 | 1 | 0.03 |
| Example 6 | d-phenothrin | 0.3 | 2 | 0.03 |
| Comparative Example 3 | d-phenothrin | 0.3 | 5 | 0.03 |
| Example 7 | d·d-T-cyphenothrin | 0.3 | 1 | 0.03 |
| Example 8 | d·d-T-cyphenothrin | 0.3 | 2 | 0.03 |
| Comparative Example 4 | d·d-T-cyphenothrin | 0.3 | 3 | 0.03 |
| Example 9 | prallethrin | 0.3 | 1 | 0.03 |
| Comparative Example 5 | prallethrin | 0.3 | 6 | 0.03 |
| Example 10 | profluthrin | 0.3 | 1 | 0.03 |
| Comparative Example 6 | profluthrin | 0.3 | 3 | 0.03 |

In the table, as Antioxidant 1, 3,9-bis(isotridecyloxy)-2,4,8,10-tetraoxa-3,9-diphosphaspiro[5.5]undecane (JPE-13R, manufactured by Johoku Chemical Co., Ltd.);

as Antioxidant 2, 3,9-bis(isodecyloxy)-2,4,8,10-tetraoxa-3,9-diphosphaspiro[5.5]undecane (JPE-10, manufactured by Johoku Chemical Co., Ltd.);

as Antioxidant 3, bis(2,4-dicumylphenyl)pentaerythritol diphosphite (Revonox 608, manufactured by Chitec Technology Co., Ltd.);

as Antioxidant 4, hydrogenated bisphenol A pentaerythritol phosphite polymer (JPH-3800, manufactured by Johoku Chemical Co., Ltd.);

as Antioxidant 5, 3,9-bis(2,6-di-tert-butyl-4-methylphenoxy)-2,4,8,10-tetraoxa-3,9-diphosphaspiro[5.5]undecane (ADEKASTAB PEP-36, manufactured by ADEKA Corporation);

as Antioxidant 6, 4-[3-(2,4,8,10-tetra-tert-butyl-6,7-dihydro-5,7-dioxa-6-phospha-5H-dibenzo[a,c]cyclohepten-6-yloxy)propyl]-2-tert-butyl-6-methylphenol (Sumilizer (Trademark) GP, manufactured by Sumitomo Chemical Co., Ltd.) were used.

Test Example 1 (Evaluation of Compositions for Resin Formulation)

The composition of Example 1, 2, or 10, or Comparative Example 1 or 6 was mixed with 20 mL of acetone to obtain an acetone solution of the composition for resin formulation. One hundred fifty (150) μL of the resulting acetone solution was evenly spread in a petri dish (45 mm in diameter) and dried for five days.
Ten adult female mosquitoes were released into a plastic cup, a perforated lid was placed on it, and the cup was placed on top of the petri dish so that the petri dish was in contact with the lid, and then the number of knocked-down insects after the KD evaluation time shown in Table 2 was counted to determine the knockdown rate. The knockdown rate (hereinafter referred to as the KD rate) can be calculated by the following formula:

KD rate (%) = (Number of knocked-down insects / Number of tested insects) × 100

The results are shown in Table 2.

Test Example 2 (Evaluation of Compositions for Resin Formulation)

The composition of Example 3, 4, or 9, or Comparative Example 2 or 5 was mixed with 20 mL of acetone to obtain an acetone solution of the composition for resin formulation. One hundred fifty (150) μL of the resulting acetone solution was evenly spread in a petri dish (45 mm in diameter) and dried for five days.
Ten adult female mosquitoes were released into a plastic cup, a perforated lid was placed on it, and the cup was placed on top of the petri dish so that the petri dish was in contact with the lid, and then the petri dish was heated to 40°C, followed by counting the number of knocked-down insects after the KD evaluation time shown in Table 2 to determine the knockdown rate. The knockdown rate (hereinafter referred to as the KD rate) can be calculated by the following formula:

KD rate (%) = (Number of knocked-down insects / Number of tested insects) × 100

The results are shown in Table 2.

Test Example 3 (Evaluation of Compositions for Resin Formulation)

The composition of Example 5, 6, 7, or 8, or Comparative Example 3 or 4 was mixed with 20 mL of acetone to obtain an acetone solution of the composition for resin formulation. One hundred fifty (150) μL of the resulting acetone solution was evenly spread in a petri dish (45 mm in diameter) and dried for five days.
The petri dish was placed in a plastic cup, and a lid was placed on it, and then ten adult female mosquitoes were released into it, followed by counting the number of knocked-down insects after the KD evaluation time shown in Table 2 to determine the knockdown rate. The knockdown rate (hereinafter referred to as the KD rate) can be calculated by the following formula:

KD rate (%) = (Number of knocked-down insects / Number of tested insects) × 100

The results are shown in Table 2.

[Table 2]

Table 2

| | KD evaluation time | KD rate (%) |
|---|---|---|
| Example 1 | 5h | 100% |
| Example 2 | 5h | 90% |
| Comparative Example 1 | 5h | 10% |
| Example 3 | 15min | 100% |
| Example 4 | 15min | 90% |
| Comparative Example 2 | 15min | 10% |
| Example 5 | 90min | 100% |
| Example 6 | 90min | 100% |
| Comparative Example 3 | 90min | 10% |
| Example 7 | 10min | 90% |
| Example 8 | 10min | 80% |
| Comparative Example 4 | 10min | 10% |
| Example 9 | 60min | 80% |
| Comparative Example 5 | 60min | 20% |
| Example 10 | 7h | 80% |
| Comparative Example 6 | 7h | 10% |

The compositions for resin formulation of Examples 1 to 10, by containing specific antioxidants, exhibited a superior knockdown rate against insect pests after a predetermined period of time compared to Comparative Examples 1 to 6, which contained antioxidants that did not belong to the present invention.

Examples 11 to 12, Comparative Example 7 (Preparation of Incense Sticks)

A THF solution of an antioxidant (antioxidant concentration: 0.5 w/v%) was spread on and adhered to a commercially available incense stick containing 0.02% dimefluthrin (manufactured by Fumakilla Limited, spiral type incense stick) so that the composition corresponded to that shown in Table 3. The incense stick was then air-dried to volatilize the THF, thus obtaining Incense Sticks 11 and 12 of the present invention containing the antioxidant. As Comparative Incense Stick 7, the conventional commercially available incense stick was used for evaluation as it is.

[Table 3]

| | Synthetic pyrethroid compound | Amount [parts by weight] | Antioxidant | Amount [parts by weight] |
|---|---|---|---|---|
| Example 11 | dimefluthrin | 0.02 | 1 | 0.2 |
| Example 12 | dimefluthrin | 0.02 | 2 | 0.2 |
| Comparative Example 7 | dimefluthrin | 0.02 | - | 0 |

In the table, as Antioxidant 1, 3,9-bis(isotridecyloxy)-2,4,8,10-tetraoxa-3,9-diphosphaspiro[5.5]undecane (JPE-13R, manufactured by Johoku Chemical Co., Ltd.); as Antioxidant 2, 3,9-bis(isodecyloxy)-2,4,8,10-tetraoxa-3,9-diphosphaspiro[5.5]undecane (JPE-10, manufactured by Johoku Chemical Co., Ltd.) were used.

Test Example 4 (Evaluation of Incense Sticks)

Incense Stick 11 or 12 of the present invention, or Comparative Incense Stick 7 was left to stand in a laboratory draft chamber. For rapid evaluation, the laboratory was set to a room temperature of 30°C using air conditioning and a condition in which outside air was continuously allowed to flow in, thereby creating harsh test conditions in which the active ingredient is more easily decomposed than under typical indoor use.

Three weeks after placing the incense sticks in the draft chamber, the content of dimefluthrin remaining in the incense sticks was analyzed by gas chromatography, and the residual ratio relative to the initial content was calculated. In this calculation, the water content in the incense sticks was measured with an infrared moisture analyzer, and the

dimefluthrin content was calculated with the effect of water content subtracted. The results are shown in Table 4.

[Table 4]

| | Dimefluthrin residual ratio (%) |
|---|---|
| Example 11 | 71.6 |
| Example 12 | 70.4 |
| Comparative Example 7 | 64.8 |

Incense Sticks 11 and 12 of the present invention, by containing specific antioxidants, exhibited superior stability of the active ingredient compared to Comparative Incense Stick 7, which did not contain any antioxidant.

[Industrial Applicability]

According to the present invention, it is possible to provide a novel composition containing a synthetic pyrethroid compound that excels in maintaining insect pest control effect.

[Explanation of References]

20: Case
21: Inner member
22: Outer member
23, 24: Opening
25: Resin formulation
26: Hook
30: End portion
31: Slit

**Claims**

1. A composition comprising a synthetic pyrethroid compound and a compound represented by Formula (1):

[Chemical 1]

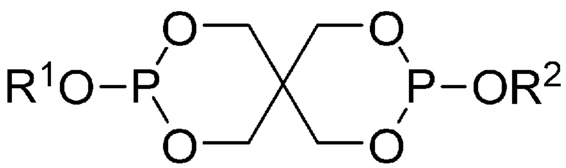

(1)

[In the formula, $R^1$ and $R^2$ are identical to or different from each other, and each represents a C9-C14 alkyl group.].

2. The composition according to claim 1, wherein the synthetic pyrethroid compound is a synthetic pyrethroid compound having a partial structure represented by Formula (2):

[Chemical 2]

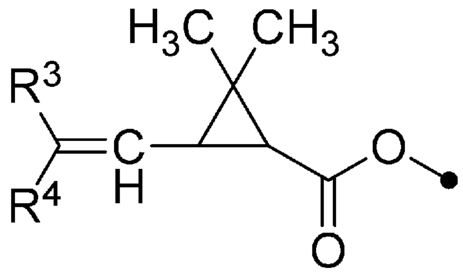

(2)

[In the formula, $R^3$ and $R^4$ are identical to or different from each other, and each represents a methyl group, a cyano group, a halogen atom, or a hydrogen atom, and **'•'** represents a binding site.].

3. The composition according to claim 2, wherein $R^3$ and $R^4$ are identical to or different from each other, and each is a methyl group, a chlorine atom, or a hydrogen atom.

4. The composition according to claim 2, wherein $R^3$ and $R^4$ are identical to or different from each other, and each is a methyl group or a hydrogen atom.

5. The composition according to claim 1, wherein the synthetic pyrethroid compound is allethrin, prallethrin, metofluthrin, dimefluthrin, tetramethrin, imiprothrin, phenothrin, cyphenothrin, empenthrin, profluthrin, or resmethrin.

6. The composition according to claim 1, wherein the synthetic pyrethroid compound is allethrin, prallethrin, metofluthrin, dimefluthrin, tetramethrin, imiprothrin, phenothrin, cyphenothrin, profluthrin, or resmethrin.

7. The composition according to claim 1, wherein the synthetic pyrethroid compound is prallethrin, metofluthrin, dimefluthrin, phenothrin, cyphenothrin, or profluthrin.

8. The composition according to claim 1, wherein the synthetic pyrethroid compound is etofenprox, permethrin, cypermethrin, flucythrinate, tralomethrin, cyfluthrin, cyhalothrin, tefluthrin, fluvalinate, fenpropathrin, bifenthrin, acrinathrin, cycloprothrin, silafluofen, or fenvalerate.

9. The composition according to claim 1, wherein $R^1$ and $R^2$ in the compound represented by Formula (1) are identical to or different from each other, and each is a C10-C13 alkyl group.

10. The composition according to claim 1, wherein $R^1$ and $R^2$ in the compound represented by Formula (1) are identical to or different from each other, and each is an isodecyl group or an isotridecyl group.

11. Use of the composition according to any one of claims 1 to 10 as an insect pest control agent.

12. An insect pest control method using the composition according to any one of claims 1 to 10.

[Figure 1]

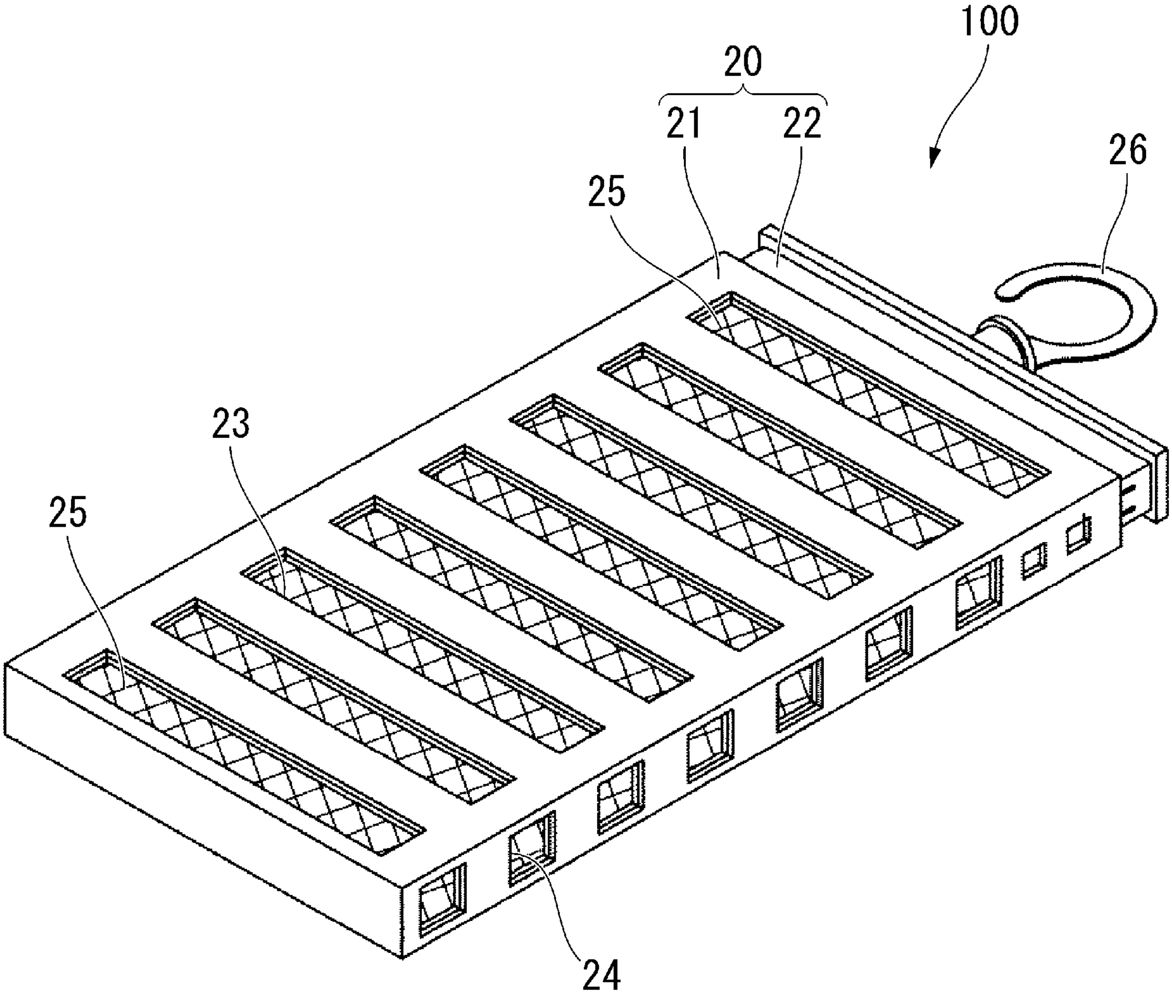

[Figure 2]

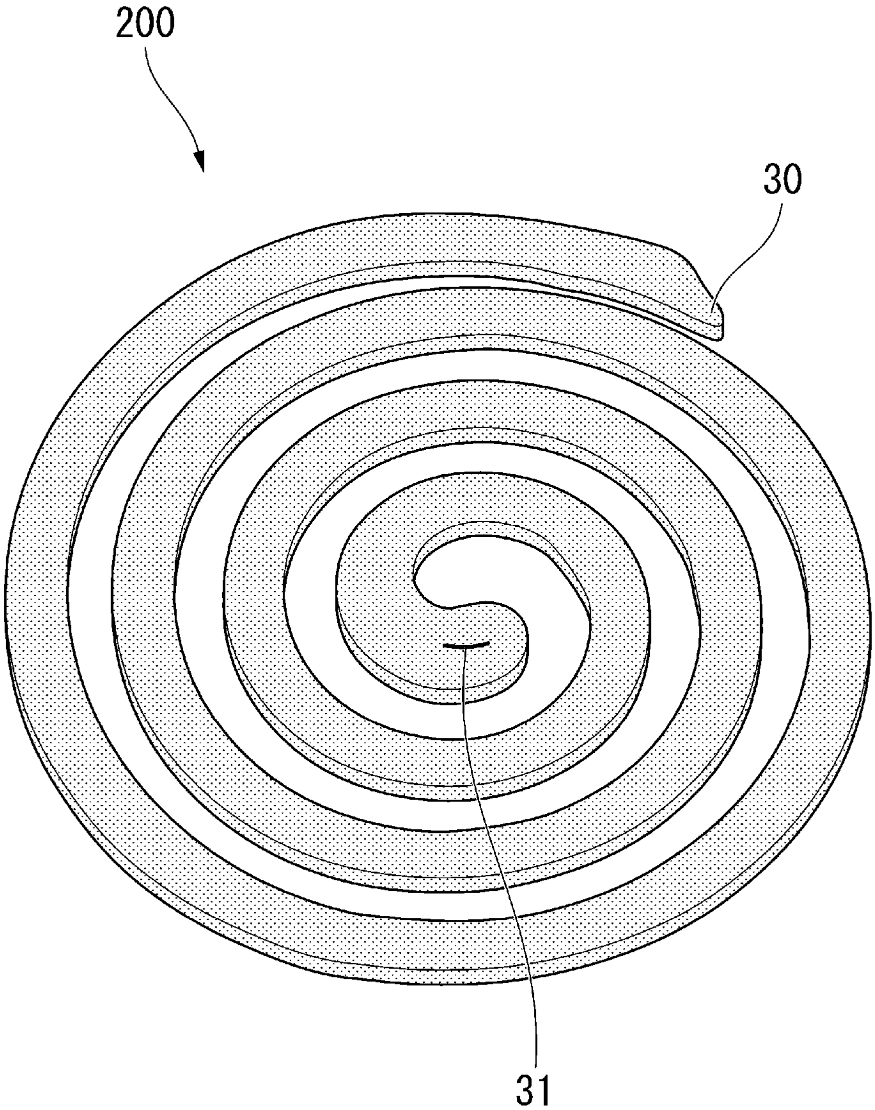

## INTERNATIONAL SEARCH REPORT

International application No.
**PCT/JP2024/031298**

### A. CLASSIFICATION OF SUBJECT MATTER

***A01N 25/00***(2006.01)i; ***A01N 53/06***(2006.01)i; ***A01N 53/08***(2006.01)i; ***A01N 53/10***(2006.01)i; ***A01P 7/00***(2006.01)i
FI: A01N25/00 101; A01N53/08 100; A01N53/10 210; A01P7/00; A01N53/06 110

According to International Patent Classification (IPC) or to both national classification and IPC

### B. FIELDS SEARCHED

Minimum documentation searched (classification system followed by classification symbols)

A01N25/00; A01N53/06; A01N53/08; A01N53/10; A01P7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| Y | JP 11-021206 A (SUMITOMO CHEMICAL CO., LTD.) 26 January 1999 (1999-01-26)<br>claims, paragraphs [0001], [0005], [0014], examples 4, 12 | 1-12 |
| Y | 亜リン酸エステル類：品種別一覧, 城北化学工業株式会社 (Johoku chemical), [online], 13 May 2021, [retrieved on 30 September 2024], Internet <URL:https://web.archive.org/web/20210513215115/https://www.johoku-chemical.com/phosphites/>, non-official translation (Phosphite esters: List by type)<br>JPE-10, JPE-13R | 1-12 |
| Y | CN 107200866 A (SHANTOU CITY BAYU NEW MATERIAL CO., LTD.) 26 September 2017 (2017-09-26)<br>paragraphs [0031]-[0033] | 1-12 |
| Y | JP 2015-105245 A (HAKUGEN EARTH CO., LTD.) 08 June 2015 (2015-06-08)<br>claims, paragraphs [0001], [0026]-[0027], examples | 6-8 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 September 2024** | **15 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/031298**

**C. DOCUMENTS CONSIDERED TO BE RELEVANT**

| Category* | Citation of document, with indication, where appropriate, of the relevant passages | Relevant to claim No. |
|---|---|---|
| A | JP 2011-149000 A (SUMITOMO CHEMICAL COMPANY, LIMITED) 04 August 2011 (2011-08-04) claims, examples | 1-12 |
| A | CN 109749501 A (DANYANG TIANNING SOLAR ENERGY CO., LTD.) 14 May 2019 (2019-05-14) claims, examples | 1-12 |
| A | US 3205250 A (HOOKER CHEMICAL CORPORATION) 07 September 1965 (1965-09-07) claims, examples | 1-12 |

Form PCT/ISA/210 (second sheet) (July 2022)

**INTERNATIONAL SEARCH REPORT**
**Information on patent family members**

International application No.
**PCT/JP2024/031298**

| Patent document cited in search report | Publication date (day/month/year) | Patent family member(s) | Publication date (day/month/year) |
|---|---|---|---|
| JP 11-021206 A | 26 January 1999 | (Family: none) | |
| CN 107200866 A | 26 September 2017 | (Family: none) | |
| JP 2015-105245 A | 08 June 2015 | (Family: none) | |
| JP 2011-149000 A | 04 August 2011 | WO 2011/078375 A1<br>claims, examples<br>CN 102655741 A | |
| CN 109749501 A | 14 May 2019 | (Family: none) | |
| US 3205250 A | 07 September 1965 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023143209 A
- JP 2000063329 A
- JP 2001011022 A